# EUROPEAN PATENT SPECIFICATION

(11) **EP 3 944 688 B1**
(45) Date of publication and mention of the grant of the patent: **09.10.2024**
(21) Application number: 19919927.4
(22) Date of filing: 20.03.2019
(51) Int. Cl.: H04L 1/08, H04L 1/1607, H04L 1/1829, H04L 1/1867, H04L 5/00

(54) **USER TERMINAL AND WIRELESS COMMUNICATION METHOD**
BENUTZERENDGERÄT UND DRAHTLOSKOMMUNIKATIONSVERFAHREN
TERMINAL UTILISATEUR ET PROCÉDÉ DE COMMUNICATION SANS FIL

(43) Date of publication of application: 26.01.2022
(73) Proprietor: NTT DOCOMO, INC., Chiyoda-Ku Tokyo 100-6150 (JP)
(72) Inventor: MATSUMURA, Yuki, Tokyo 100-6150 (JP); NAGATA, Satoshi, Tokyo 100-6150 (JP); GUO, Shaozhen, Beijing 100190 (CN); WANG, Jing, Beijing 100190 (CN); HOU, Xiaolin, Beijing 100190 (CN)
(74) Representative: Hoffmann Eitle
(86) International application number: PCT/JP2019/011895
(87) International publication number: WO 2020/188819

(56) References cited:
- WO-A1-2018/203405
- WO-A1-2018/228487
- JP-A- 2016 219 895
- INTEL CORPORATION: "Support of different numerologies for carrier aggregation", vol. RAN WG1, no. Vancouver, Canada; 20180122 - 20180126, 13 January 2018 (2018-01-13), XP051384797, Retrieved from the Internet <URL:http://www.3gpp.org/ftp/tsg%5Fran/WG1%5FRL1/TSGR1%5FAH/NR%5FAH%5F1801/Docs/> [retrieved on 20180113]
- QUALCOMM INC.: "Multi-TRP Enhancements", 3GPP TSG-RAN WG1 MEETING AH-1901, R1- 1900905, 12 January 2019 (2019-01-12), XP051576442
- 3GPP TS 38.213, no. V15.4.0, 16 January 2019 (2019-01-16), pages 39 - 44, XP051591795
- SAMSUNG: "HARQ-ACK Feedback for Numerology Multiplexing", 3GPP TSG RAN WG1 #88BIS, R1- 1705402, 25 March 2017 (2017-03-25), XP051243532

## Description

### Technical Field

The present invention relates to a terminal, a radio communication method, a base station and a system in next-generation mobile communication systems.

### Background Art

In Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G))," "5G+ (plus)," "New Radio (NR)," "3GPP Rel. 15 (or later versions)," and so on) are also under study.

In existing LTE systems (for example, 3GPP Rel. 8 to Rel. 14), a user terminal (User Equipment (UE)) controls transmission of a physical uplink shared channel (for example, a Physical Uplink Shared Channel (PUSCH)) and reception of a downlink shared channel (for example, a Physical Downlink Control Channel (PDSCH)), based on downlink control information (DCI).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

INTEL CORPORATION: "Support of different numerologies for carrier aggregation",3GPP DRAFT; R1-1800338 relates to potential RAN1 issues to enable the CA operation with different numerologies within a PUCCH group.

WO 2018/228487 A1 relates to control information for scheduling a transmission resource for downlink and uplink communications between one or more TRP and one or more UE.

One Physical Downlink Control Channel for DL control information transmission is assumed to carry at least one assignment or scheduling information block for at least one Physical Downlink Shared Channel for DL data transmission or for at least one Physical Uplink Shared Channel for UL data transmission. It is also described methods of providing configuration information that can be used by a user equipment to determine transmission mode for the Physical Downlink Shared Channel and the Physical Uplink Shared Channel as well as information to determine where to monitor for the Physical Downlink Shared Channel, Physical Uplink Shared Channel and Physical Uplink Control Channel information.

### Summary of Invention

### Technical Problem

For future radio communication systems (for example, NR), a scheme in which one or a plurality of transmission/reception points (TRPs) (multi-TRPs) perform DL transmission for a user terminal (User Equipment (UE)) has been under study.

However, in NR specifications up to the present, multi-TRPs are not taken into consideration. Thus, when multi-TRPs are used, how to control transmission of a UL signal (for example, an uplink control channel or the like) has not yet been fully studied.

In the light of this, the present disclosure has one object to provide a user terminal and a radio communication method capable of appropriately carrying out UL transmission even when multi-TRPs are used.

### Solution to Problem

The object of the invention is achieved by the subject-matter of the independent claims. Further examples are provided for facilitating the understanding of the invention.

An aspect of the invention includes a terminal according to claim 1.

According to the present invention, UL transmission can be appropriately carried out even when multi-TRPs are used.

### Brief Description of Drawings

FIG. 1A to FIG. 1C are each a diagram to show an example of a multi-TRP scenario;
FIGS. 2A to 2C are each a diagram to show an example of slot level HARQ-ACK timing values;
FIG. 3 is a diagram to show a first example of slot level semi-static codebook determination operation;
FIG. 4 is a diagram to show a second example of slot level semi-static codebook determination operation;
FIG. 5 is a diagram to show a third example of slot level semi-static codebook determination operation;
FIG. 6 is a diagram to show an example of configuration of occasions for PDSCH reception candidates;
FIG. 7 is a diagram to show an example of joint HARQ-ACK feedback control according to the first aspect;
FIG. 8 is a diagram to show another example of joint HARQ-ACK feedback control according to the first aspect;
FIG. 9 is a diagram to show another example of joint HARQ-ACK feedback control according to the first aspect;
FIG. 10 is a diagram to show another example of joint HARQ-ACK feedback control according to the first aspect;
FIG. 11 is a diagram to show an example of determination of a sub-codebook for each TRP;
FIG. 12 is a diagram to show an example of joint HARQ-ACK feedback control according to the second aspect;
FIG. 13 is a diagram to show another example of joint HARQ-ACK feedback control according to the second aspect;
FIG. 14 is a diagram to show another example of joint HARQ-ACK feedback control according to the second aspect;
FIGS. 15A and 15B are each a diagram to show a TRP determination example based on a CORESET;
FIGS. 16A and 16B are each a diagram to show a TRP determination example based on a sequence ID;
FIG. 17 is a diagram to show an example of a schematic structure of a radio communication system according to one embodiment;
FIG. 18 is a diagram to show an example of a structure of a base station according to one embodiment;
FIG. 19 is a diagram to show an example of a structure of a user terminal according to one embodiment; and
FIG. 20 is a diagram to show an example of a hardware structure of the base station and the user terminal according to one embodiment.

### Description of Embodiments

### (Multi-TRP)

For NR, a scheme in which one or a plurality of transmission/reception points (TRPs) (multi-TRPs) perform DL transmission (for example, PDSCH transmission) for a UE by using one or a plurality of panels (multiple panels) has been under study. Note that, in this specification, the transmission/reception point (TRP) may be interpreted as a transmission point, a reception point, a panel, a cell, a serving cell, a carrier, or a component carrier (CC).

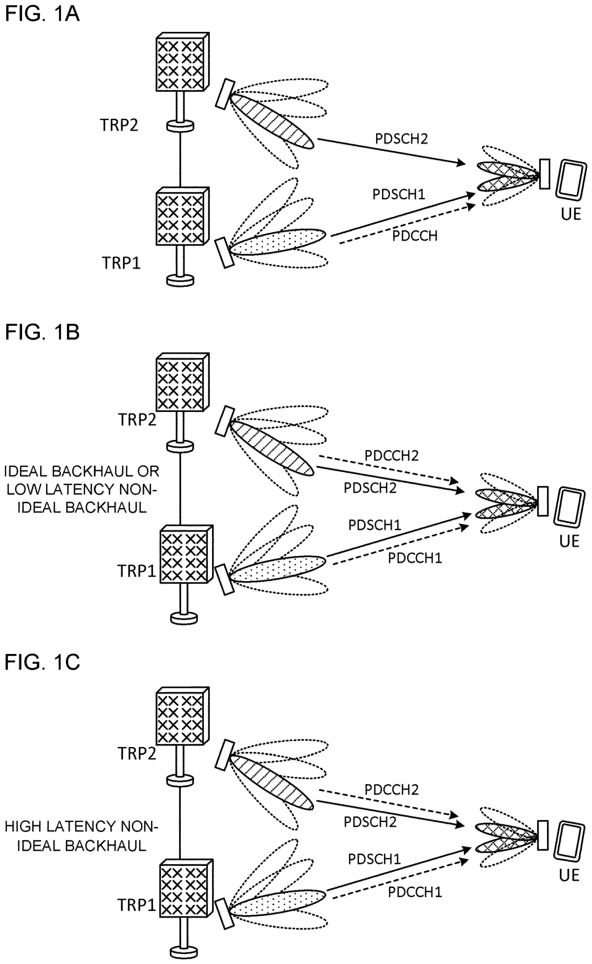

FIGS. 1A to 1C are each a diagram to show an example of a multi-TRP scenario. In FIGS. 1A to 1C, it is assumed that each TRP can transmit four different beams, but this is not restrictive. Note that, in FIGS. 1A to 1C, each TRP includes one panel. However, one TRP may include a plurality of panels, and reception of a PDSCH from each of the plurality of panels may be controlled by a PDCCH from a single panel or a plurality of panels.

FIG. 1A shows an example of a case in which only one TRP (in the present example, TRP 1) out of the multi-TRPs transmits a control signal (for example, a downlink control channel (Physical Downlink Control Channel (PDCCH))) to the UE, and the multi-TRP transmit data signals (for example, downlink shared channels (Physical Downlink Shared Channels (PDSCHs))).

For example, in FIG. 1A, the UE receives PDSCHs 1 and 2 respectively transmitted from TRPs 1 and 2, based on one PDCCH (DCI) from TRP 1. In this manner, scheduling of the PDSCH from a plurality of TRPs using the PDCCH (DCI) from a single TRP is also referred to as single DCI, a single PDCCH, a single master mode, PDCCH type A (first PDCCH type), DMRS port group type A (first DMRS port group type) or the like.

FIG. 1B shows an example of a case in which each of the multi-TRPs transmits different control signals (in particular, PDCCHs) to the UE, and the multi-TRPs transmit data signals ( in particular, PDSCHs).

For example, in FIGS. 1B and 1C, the UE receives PDSCHs 1 and 2 respectively transmitted from TRPs 1 and 2, based on PDCCHs (DCI) 1 and 2 respectively transmitted from TRPs 1 and 2. In this manner, scheduling of the PDSCHs from a plurality of TRPs using the PDCCHs (DCI) from a plurality of TRPs is also referred to as multiple pieces of DCI, multiple PDCCHs, multiple master modes, or the like.

In the multiple PDCCHs, as shown in FIG. 1B, the plurality of TRPs (for example, TRPs 1 and 2) may be connected with an ideal backhaul, or may be connected with a low latency non-ideal backhaul. The scenario shown in FIG. 1B is also referred to as PDCCH type B (second PDCCH type), DMRS port group type B (second DMRS port group type), or the like.

Alternatively, in the multiple PDCCHs, as shown in FIG. 1C, the plurality of TRPs (for example, TRPs 1 and 2) may be connected with a large latency non-ideal backhaul. The scenario shown in FIG. 1B is also referred to as PDCCH type C (third PDCCH type), DMRS port group type C (second DMRS port group type), or the like.

In the multi-TRP scenario as described above, transmission of a non-coherent (non-coherent transmission) DL signal (in particular, a PDSCH) from each of the plurality of TRPs has been under study. Transmission of non-coherent DL signals (or, DL channels) in cooperation with each other from the plurality of TRPs is also referred to as NCJT (Non-Coherent Joint Transmission).

For example, the PDSCHs corresponding to the same codeword (CW) may be transmitted from the plurality of TRPs by using different layers. For example, PDSCH 1 corresponding to CW 1 may be transmitted from TRP 1 by using a certain number of layers (for example, layers 1 and 2), and PDSCH 2 corresponding to CW 1 may be transmitted from TRP 2 by using a certain number of layers (for example, layers 3 and 4).

Alternatively, the PDSCHs corresponding to different CWs may be transmitted from the plurality of TRPs. For example, PDSCH 1 corresponding to CW 1 may be transmitted from TRP 1, and PDSCH 2 corresponding to CW 2 may be transmitted from TRP 2. Note that the CW may be interpreted as a transport block (TB).

The plurality of PDSCHs on which NCJT is performed may be assumed not to be quasi-co-location (QCL) (not quasi-co-located). The plurality of PDSCHs on which NCJT is performed are determined to be partially or entirely overlapped in at least one of the time and frequency domains.

In the multi-TRP scenario described above, how to control transmission of uplink control information (for example, also referred to as UCI) is a problem. The UCI includes channel state information (CSI) or the like that is calculated based on the HARQ-ACK corresponding to the PDSCH and a DL reference signal.

In particular, when the UE receives the PDSCHs (PDSCH 1 and PDSCH of FIG. 1) transmitted from the plurality of TRPs, how to transmit HARQ-ACK 1 for PDSCH 1 and HARQ-ACK 2 for PDSCH 2 is a problem. The HARQ-ACK may be interpreted as at least one of a HARQ-ACK payload, a HARQ-ACK feedback, an ACK/NACK payload, and an ACK/NACK feedback.

As transmission of a plurality of HARQ-ACKs, separate transmission of the plurality of HARQ-ACKs is conceivable. For example, transmissions of HARQ-ACK 1 for PDSCH 1 and HARQ-ACK 2 for PDSCH 2 are controlled separately from each other. The method of separately controlling the transmissions of HARQ-ACK 1 and HARQ-ACK 2 may be referred to as separate ACK/NACK feedback.

On the other hand, in certain cases, it may be preferable to simultaneously control the transmissions of HARQ-ACK 1 for PDSCH 1 and HARQ-ACK 2 for PDSCH 2. The method of simultaneously controlling the transmissions of HARQ-ACK 1 and HARQ-ACK 2 may be referred to as joint ACK/NACK feedback.

In the multi-TRP scenario, in a case that the PDSCH of each TRP is scheduled by one PDCCH (or, DCI) or a case that the plurality of TRPs are connected with each other with the ideal backhaul or the low latency non-ideal backhaul, it is preferable to apply the joint ACK/NACK feedback. In these cases, by simultaneously performing transmissions of the HARQ-ACKs for each TRP, transmission control (for example, resource specification or the like) of the HARQ-ACKs can be simplified, and throughput can be enhanced. As a matter of course, the case in which the joint ACK/NACK feedback can be applied is not limited to this.

However, in the multi-TRP scenario, how to control the joint ACK/NACK feedback (or, the joint ACK/NACK payload) has not yet been fully studied.

The inventors of the present invention came up with the idea of applying the same type of HARQ-ACK codebook to the HARQ-ACKs (for example, HARQ-ACK 1 and HARQ-ACK 2) corresponding to different TRPs in the joint ACK/NACK feedback. In particular, the joint ACK/NACK feedback is performed by applying any one of the semi-statically configured type 1 HARQ-ACK codebook and the dynamically configured type 2 HARQ-ACK codebook for the HARQ-ACKs corresponding to different TRPs.

An embodiment according to the present disclosure will be described below in detail with reference to the drawings. Note that each aspect of the present embodiment may be applied individually, or may be applied in combination. Note that the following description assumes a case in which the semi-statically configured type 1 HARQ-ACK codebook (also referred to as a semi-static codebook) is applied to the HARQ-ACKs corresponding to different TRPs. However, this is not restrictive.

Note that, in the present embodiment, a TRP, a panel, an Uplink (UL) transmission entity, an antenna port of a demodulation reference signal (DMRS) (DMRS port), a group of DMRS ports (DMRS port), a group of DMRS ports multiplexed by code division multiplexing (CDM) (CDM group), a control resource set (CORESET), a search space set, a PDSCH, a codeword, a base station, and the like are interpreted as each other.

A panel Identifier (ID) and a panel may be interpreted as each other. A TRP ID and a TRP may be interpreted as each other. A cell ID and a cell (serving cell) may be interpreted as each other. An ID, an index, and a number may be interpreted as each other.

Note that, in the present embodiment, the cell ID is interchangeably interpreted as a serving cell ID, a serving cell index, a carrier index, a CC index, a carrier identifier, or the like.

The present embodiment can be applied to a communication system as long as the communication system uses a plurality of TRPs. For example, the present embodiment may be applied to a configuration (NCJT) in which non-coherent DL signals (for example, CWs or TBs) are transmitted in cooperation from a plurality of TRPs, and a configuration in which one DL signal (for example, a CW or a TB) is repeatedly transmitted from a plurality of TRPs. In the repeated transmission, one CW or TB may be repeatedly transmitted in at least one of the time domain, the frequency domain, and the spatial domain.

The following description assumes a case in which the plurality of TRPs have the same cell ID. However, this is not restrictive, and the present embodiment can also be applied to a case in which the plurality of TRPs have different cell IDs.

### (First Aspect)

In a first aspect, reception candidate occasions of the PDSCH (occasions for candidate PDSCH receptions, or candidate PDSCH reception occasions) are determined, and then at least one of the number of HARQ-ACK bits and HARQ-ACK bit order is determined based on each of the reception candidate occasions. In the following, description is given by taking an example of a case in which there are two TRPs. However, the present invention can be similarly applied to a case in which there are three or more TRPs as well.

In the multiple TRP scenario, when the type 1 (for example, the semi-static HARQ-ACK codebook) is configured as an HARQ-ACK codebook type, the UE controls the joint ACK/NACK feedback, based on the following steps 1 and 2.

In step 1, the UE determines a set of occasions of the PDSCH reception candidates. In step 2, the UE determines the total number of HARQ-ACK bits and the HARQ-ACK bit order, based on a certain rule.

### <Step 1>

The UE determines a set of PDSCH reception candidate occasions. The UE may determine the reception candidate occasions of the PDSCH by using the operation defined in Rel. 15 of 5G (or NR) .

For example, the UE determines a set of M_{A,c} occasions for the PDSCH reception candidates (a set of M_{A,c} occasions for candidate PDSCH receptions), based on a certain rule. The set of occasions for the PDSCH reception candidates may correspond to the HARQ-ACK transmitted in certain slot n.

The set of occasions for the PDSCH reception candidates may be determined based on at least one of the following conditions (1) to (4).
(1) Timing value (K₁) of the HARQ-ACK
(2) PDSCH resource allocation table
(3) Ratio between a subcarrier spacing of DL transmission (for example, the PDSCH) and a subcarrier spacing of UL transmission (for example, the PUCCH)
(4) UL/DL configuration configured from a network (for example, the base station)

The HARQ-ACK timing value (K₁) may be a value reported on DCI, or may be a value configured using higher layer signaling (for example, dl-DataToUL-ACK).

The PDSCH resource allocation table may be a table (PDSCH time domain resource allocation table) in which association between a slot offset (K₀), the start and the length of the PDSCH, and a mapping type of the PDSCH is defined. For example, for each row index (RI) of the PDSCH resource allocation table, the association between a certain slot offset (K₀), the start and the length of the PDSCH, and the mapping type of the PDSCH is defined, and the occasion of the PDSCH reception candidate corresponding to each RI may be assumed.

UL/DL configuration configured from the base station may be configured using higher layer signaling (for example, at least one of TDD-UL-DL-ConfigurationCommon and TDD-UL-DL-ConfigDedicated).

Specifically, the UE may determine a set of PDSCH reception candidate occasions in which the HARQ-ACK bits can be transmitted in the PUCCH transmitted in slot n in a serving cell c (or active downlink BWP and uplink BWP of the serving cell c), based on at least one parameter described above. For example, the UE may determine the set of reception candidate occasions (M_{A,c}) of the PDSCH, according to the following processes (1) and (2).

### - Process (1)

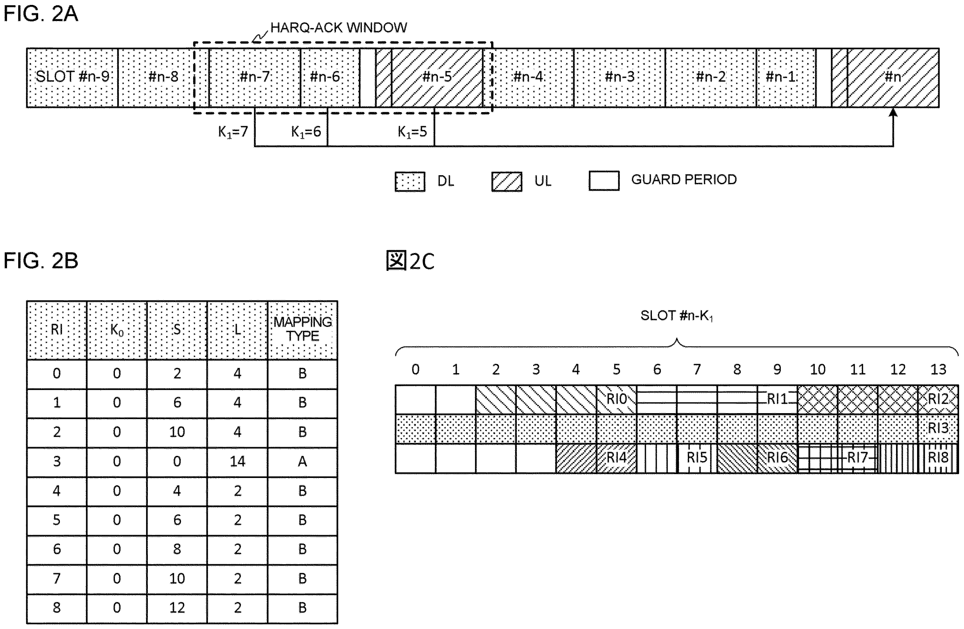

The UE determines a HARQ-ACK window, based on a slot level HARQ-ACK timing value K₁. For example, in FIG. 2A, the HARQ-ACK window for the HARQ-ACK bits transmitted in slot #n is determined as slot #n-K₁ (K₁ = 2, 3, 4). It can also be said that the HARQ-ACK window is cardinality of a set C (K₁) of HARQ-ACK timing values K₁. For example, in FIG. 2A, C (K₁) = {7, 6, 5}.

Note that C (K₁) including one or more HARQ-ACK timing values K₁ may be determined based on at least one of a certain field value in the DCI and a higher layer parameter (for example, dl-DataToUL-ACK) .

### - Process (2)

The UE may determine the PDSCH reception candidate occasions in each slot for each HARQ-ACK timing value K₁ in C (K₁). The UE may repeat the following processes (2-1) and (2-2) for each HARQ-ACK timing value K₁ in C (K₁), and determine the semi-static HARQ-ACK codebook transmitted in slot #n.

### - Process (2-1)

The UE may determine the PDSCH reception candidate occasions available in slot #n-K₁, based on at least one of a PDSCH time domain RA table and a format of slot #n-K₁ corresponding to the HARQ-ACK timing values K₁. The PDSCH reception candidate occasions may be a period (also referred to as "occasion", "candidate occasion", or the like) as one or more candidates for reception of the PDSCH.

Specifically, the UE may determine the PDSCH reception candidate occasions of slot #n-K₁, based on the PDSCH time domain RA table, and may subsequently exclude at least a part of the PDSCH reception candidate occasions as unavailable, based on the format of slot #n-K₁ (or may extract at least a part of the PDSCH reception candidate occasions as available, based on the format of slot #n-K₁).

Note that the format of slot #n-K₁ may be determined based on at least one of a cell-specific TDD UL/DL configuration (for example, *TDD-UL-DL-ConfigurationCommon* in the above), a slot-specific TDD UL/DL configuration (for example, *TDD-UL-DL-ConfigDedicated),* and the DCI.

### - Process (2-2)

The UE assigns indices to the PDSCH reception candidate occasions determined in process (2-1). The UE may assign the same index (value) to a plurality of PDSCH reception candidate occasions whose at least part of symbols overlap with each other, and generate the HARQ-ACK bits for each index (value) of the PDSCH reception candidate occasions.

With reference to FIGS. 2B, 2C, and 3 to 5, the following illustrates an example of determination of the static HARQ-ACK codebook when the set C (K₁) of HARQ-ACK timing values K₁ includes 7, 6, and 5 (see FIG. 2A).

FIG. 2B shows an example of the PDSCH time domain RA table. As shown in FIG. 2B, in the PDSCH time domain RA table, for example, the row index (RI) may be associated with at least one of the offset K₀, an index S of the start symbol to which the PDSCH is allocated, the number of symbols (allocation length) L allocated to the PDSCH, and the mapping type of the PDSCH. Each row of the PDSCH time domain RA table may indicate a PDSCH time domain RA for the PDSCH (specifically, a candidate PDSCH reception occasion).

FIG. 2C shows an example of the PDSCH reception candidate occasions determined based on the PDSCH time domain RA table of FIG. 2B. For example, in the PDSCH time domain RA table of FIG. 2B, if RI = 0, K₀ = 0, S = 2, and L = 4. Thus, the PDSCH reception candidate occasions determined based on RI = 0 include four symbols (specifically, symbols #2 to #5) from symbol #2 of slot #n-K₁. Similarly, FIG. 2C shows the PDSCH reception candidate occasions determined based on RI = 1 to 8.

### <Case where K₁ = 7>

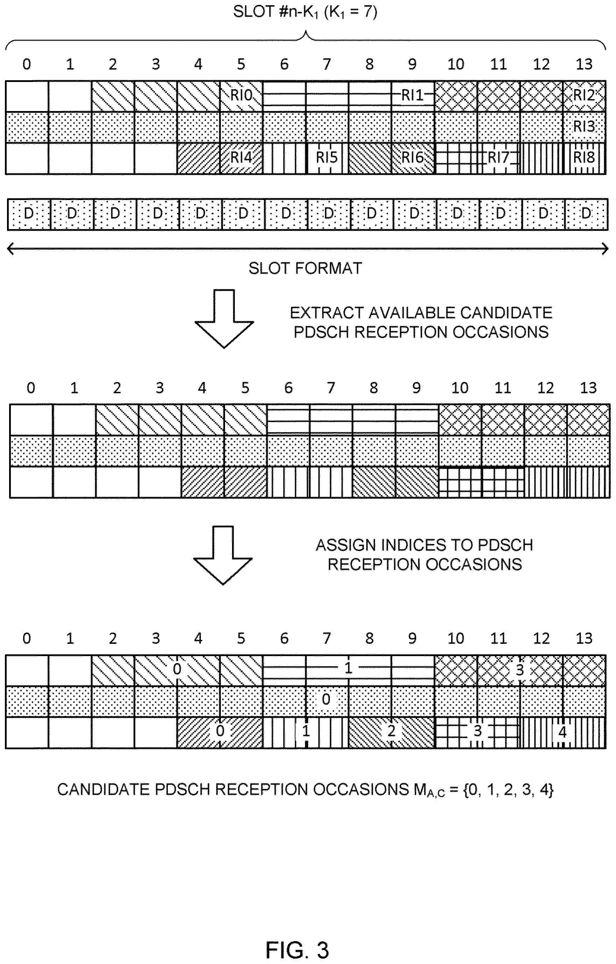

FIG. 3 shows a case in which slot #n-K₁ is a format all of whose symbols are downlink symbols (D). In the slot #n-K₁ (for example, slot #n-7 of FIG. 2A) all of whose symbols are downlink symbols, the UE can use all of the PDSCH reception candidate occasions determined respectively based on RI = 0 to 8.

Thus, as shown in FIG. 3, all of the PDSCH reception candidate occasions determined respectively based on RI = 0 to 8 are extracted, and indices (identifiers or IDs) are assigned to the extracted PDSCH reception candidate occasions. Here, the same index may be assigned to a plurality of PDSCH reception candidate occasions whose at least part of symbols overlap (collide) with each other.

For example, in FIG. 3, a part of the symbols of three PDSCH reception candidate occasions determined based on RI = 0, 3, 4 overlap with each other, and thus the same index "0" is assigned to these PDSCH reception candidate occasions. Similarly, a part of the symbols of two PDSCH reception candidate occasions determined based on RI = 2, 7 overlap with each other, and thus the same index "3" is assigned to these PDSCH reception candidate occasions.

The PDSCH reception candidate occasions in slot #n-K₁ include the candidate PDSCH reception occasions that are identified with different indices (values) "0" to "4". The UE may generate a certain number (for example, 1 bit) of HARQ-ACK bits for the candidate PDSCH reception occasions of the respective indices.

For example, in FIG. 3, one UE can use five PDSCH reception candidate occasions in slot #n-K₁, and may thus generate the semi-static HARQ-ACK codebook including the HARQ-ACK bits of 5 bits.

### <Case where K₁ = 6>

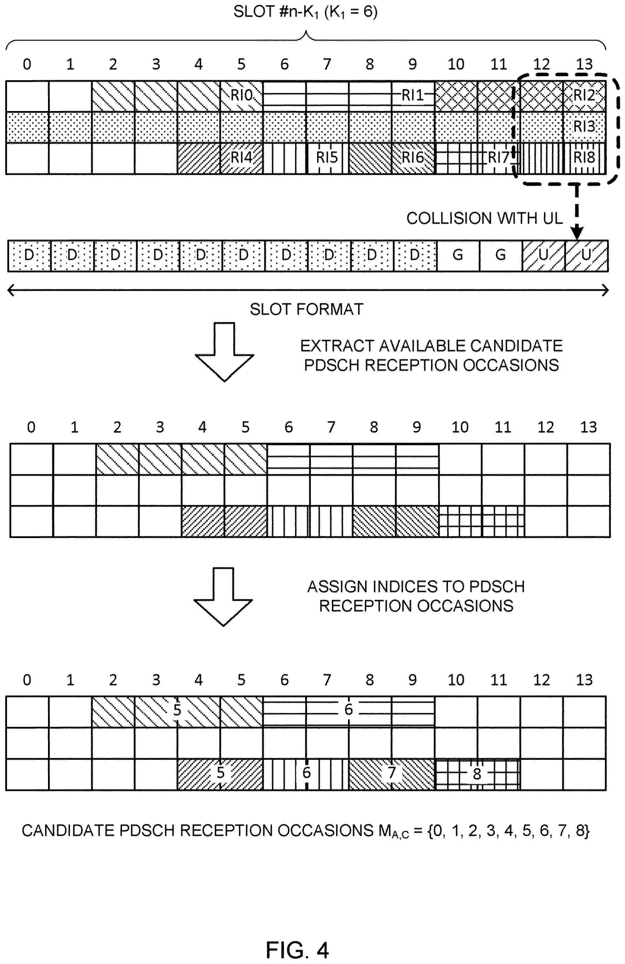

FIG. 4 shows a case in which slot #n-K₁ is a format including downlink symbols (D), uplink symbols (U), and guard periods (G). For example, in FIG. 4, symbols #0 to #9 of slot #n-K₁ (for example, slot #n-5 of FIG. 2A) are downlink symbols, symbols #12 and #13 are uplink symbol, and symbols #10 and #11 are guard periods.

In the case shown in FIG. 4, the candidate PDSCH reception occasions including uplink symbols #12 and #13 (for example, the candidate PDSCH reception occasions determined based on RI = 2, 3, 8) are unavailable in slot #n-K₁. This is because the UE cannot receive the PDSCH in uplink symbols #12 and #13.

Thus, as shown in FIG. 4, all of the PDSCH reception candidate occasions determined respectively based on RI = 0, 1, 4 to 7, except for the candidate PDSCH reception occasions determined based on RI = 2, 3, 8, are extracted, and indices (identifiers or IDs) are assigned to the extracted PDSCH reception candidate occasions.

Note that the indices may be assigned serially in the set C (K₁) of HARQ-ACK timing values K₁. For example, as described with reference to FIG. 3, in a case where K₁ = 7, the indices "0" to "4" are assigned to the PDSCH reception candidate occasions in slot #n-K₁. Thus, in a case where K₁ = 6 shown in FIG. 4, the subsequent indices "5" to "8" may be assigned to the PDSCH reception candidate occasions in slot #n-K₁.

As described above, the same index may be assigned to a plurality of PDSCH reception candidate occasions whose at least part of symbols overlap (collide) with each other. For example, in FIG. 4, a part of the symbols of two PDSCH reception candidate occasions determined based on RI = 0, 4 overlap with each other, and thus the same index "5" is assigned to these PDSCH reception candidate occasions. Similarly, the same index "6" is assigned to two PDSCH reception candidate occasions determined based on RI = 1, 5.

In this manner, regarding the UE, the semi-static HARQ-ACK codebook corresponding to the PDSCH reception candidate occasions in slot #n-K₁ (K₁ = 7, 6) may include a certain number (for example, 9 bits) of HARQ-ACK bits corresponding to the candidate PDSCH reception occasions identified with different indices (values) "0" to "8".

### <Case where K₁ = 6>

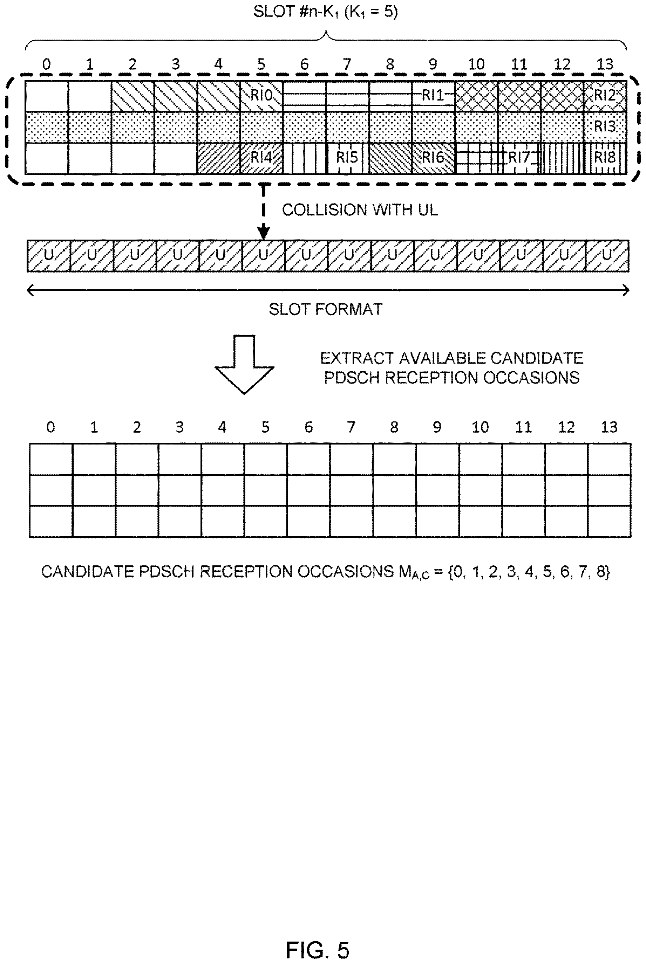

FIG. 5 shows a case in which slot #n-K₁ is a format all of whose symbols are uplink symbols (U). For example, in FIG. 5, all of symbols #0 to #13 in slot #n-K₁ (for example, slot #n-5 of FIG. 2A) are uplink symbols.

In the case shown in FIG. 5, none of the candidate PDSCH reception occasions determined based on RI = 0 to 8 is available in slot #n-K₁. Thus, as shown in FIG. 5, the candidate PDSCH reception occasions available in slot #n-K₁ need not be extracted. In this case, the HARQ-ACK bits corresponding to slot #n-K₁ (K₁ = 5) shown in FIG. 5 need not be included in the semi-static HARQ-ACK codebook corresponding to C (K₁) = 7, 6, 5.

### <Step 2>

The UE determines the total number of HARQ-ACK bits and the HARQ-ACK bit order, in consideration of a certain condition (or a certain rule) regarding each CC (or a certain CC). Note that the UE may determine the number of bits of the HARQ-ACK bits corresponding to each PDSCH reception candidate and the HARQ-ACK bit order.

The certain condition may be at least one of whether or not retransmission in the unit of a code block group (CBG) is applied, the maximum number of codewords (CWs) for each TRP, and whether or not spatial bundling across the TRPs is applied. Whether or not retransmission in the unit of the CBG is applied, the maximum number of CWs (or TBs) for each TRP, or whether or not spatial bundling across the TRPs is applied may be configured from the network to the UE by using higher layer signaling or the like.

The CBG is a group including one or more CBs, and is a unit smaller than the transport block (TB). When application of retransmission in the unit of the CBG is not configured, the UE performs transmission of the HARQ-ACK in the unit of the TB even if the TB includes a plurality of CBs. In this case, the CBs in which errors are not detected (that have succeeded in decoding) also need to be retransmitted.

In contrast, when application of retransmission in the unit of the CBG is configured, the UE can perform transmission of the HARQ-ACK in the unit of the CBG, not in the unit of the TB. In this case, the CBs in which errors are not detected (that have succeeded in decoding) need not be retransmitted. Thus, the UE controls the number of bits of the HARQ-ACK and the bit order of the HARQ-ACK, based on whether or not retransmission in the unit of the CBG is applied (or whether or not the retransmission is configured).

In the following, description will be given by taking the following cases 1 to 4 as an example of a certain condition. Note that the present aspect can also be applied to cases other than the following cases.

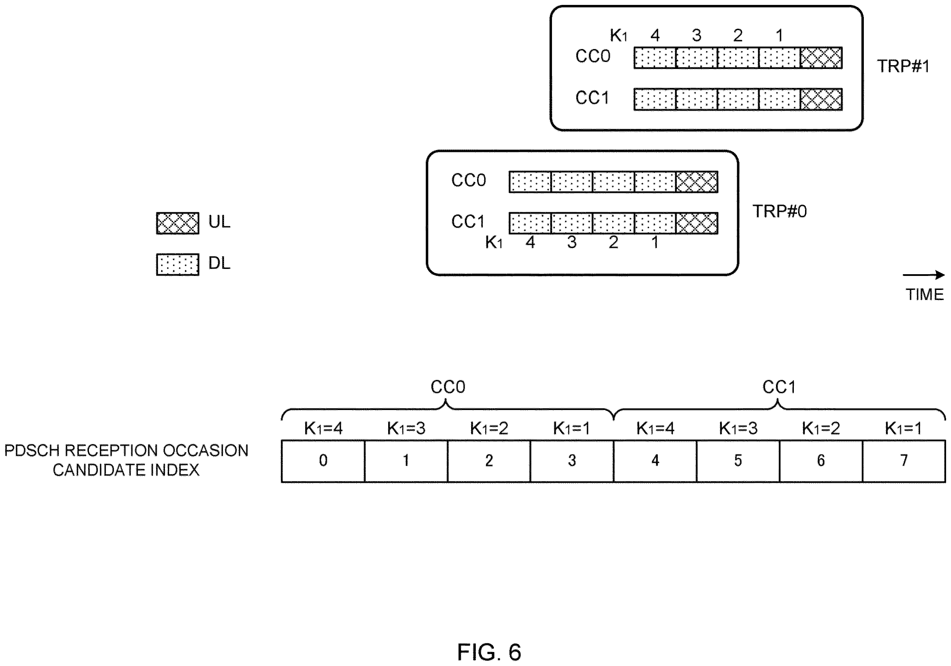

The following description assumes a case in which CC 0 and CC 1 are configured in each of TRP #1 and TRP #2. The following description also assumes a case in which HARQ-ACKs for a plurality of PDSCHs (HARQ-ACKs respectively corresponding to K₁ = 4, 3, 2, 1) are transmitted in slot n (UL) of each cell (see FIG. 6). Note that the values of K₁ may be configured using at least one of higher layer signaling (for example, dl-DataToUL-ACK) and DCI.

The description herein illustrates a case in which one PDSCH reception candidate occasion corresponds to each of K₁ = 4 to 1. As a matter of course, as described in step 1 above, a plurality of PDSCH reception candidate occasions may be configured for each K₁, or a different number of PDSCH reception candidate occasions may be configured for each K₁.

The description herein illustrates a case in which PDSCH reception candidate occasion indices respectively corresponding to K₁ = 4 to 1 of CC 0 are 0 to 3, and PDSCH reception candidate occasion indices respectively corresponding to K₁ = 4 to 1 of CC 1 are 4 to 7. The PDSCH reception candidate occasion indices are numbered based on the CC index, but this is not restrictive. The PDCCH reception candidate occasions may be configured for each

### TRP.

### [Case 1]

In case 1, the following condition is configured.
- Retransmission in the unit of the CBG: Not applied (or not configured)
- Maximum number of CWs for each TRP: 1
- Spatial bundling across the TRPs: Not applied (or not configured)

In such a case, the HARQ-ACK of M bits is generated in each PDSCH reception candidate occasion. M corresponds to the number of TRPs (or panels, PDSCHs, antenna port groups, DMRS port groups, RS related groups), and each HARQ-ACK bit corresponds to one TRP.

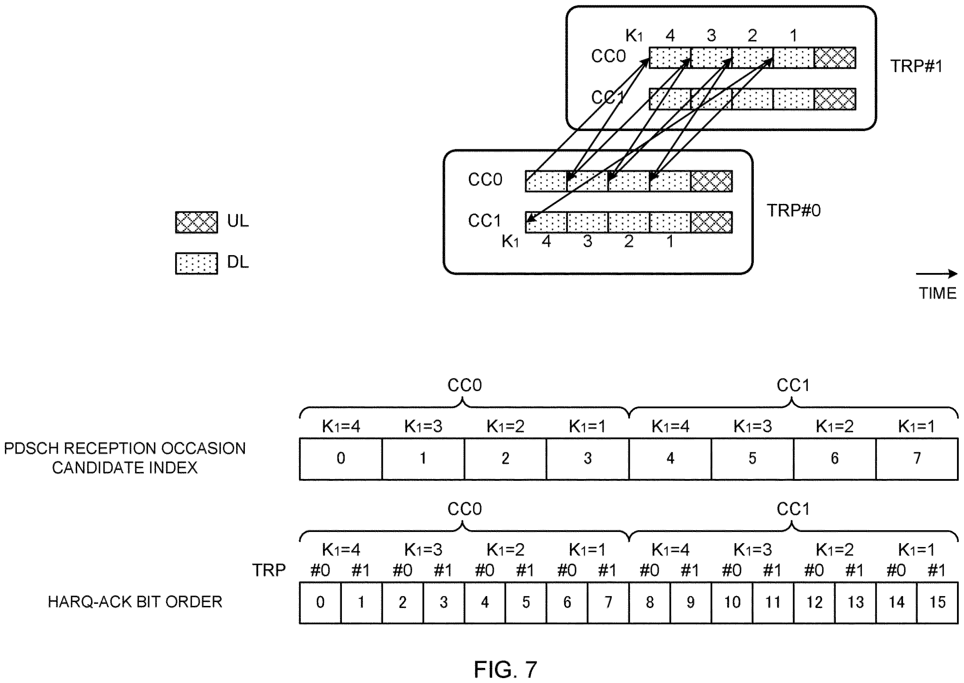

FIG. 7 shows a case in which the HARQ-ACKs for the PDSCHs respectively transmitted from two TRPs (M = 2) are joined together to be fed back. In this case, the UE generates the HARQ-ACK of M (here, M = 2) bits for each PDSCH reception candidate occasion (here, 0 to 7)) determined in step 1.

In other words, for PDSCH reception candidate occasion index 0 (K₁ = 4) of a certain CC (for example, CC 0), the HARQ-ACK corresponding to TRP #0 and the HARQ-ACK corresponding to TRP #1 are generated. For other PDSCH reception candidate occasion indices 1 to 3 (K₁ = 3 to 1) as well, similarly, the HARQ-ACK corresponding to TRP #0 and the HARQ-ACK corresponding to TRP #1 are generated.

For PDSCH reception candidate occasion indices 4 to 7 (K₁ = 4 to 1) of another CC (for example, CC 1) as well, similarly, the HARQ-ACK corresponding to TRP #0 and the HARQ-ACK corresponding to TRP #1 are generated.

In each PDSCH reception candidate occasion, the bit order of the HARQ-ACKs of M bits may be determined based on TRP index order. For example, the UE may map the HARQ-ACKs of M bits corresponding to the PDSCH reception candidate occasion indices in order from the one whose corresponding TRP index is the smallest (ascending order).

Alternatively, the HARQ-ACKs of M bits corresponding to the PDSCH reception candidate occasion indices may be mapped in order from the one whose corresponding TRP index is the largest (descending order).

When the multi-TRP scenario is performed using a plurality of cells (or CCs), step 1 and step 2 described above are performed for each CC, and then the HARQ-ACKs corresponding to a plurality of CCs may be included in one HARQ-ACK codebook.

In this case, the bit order of the HARQ-ACK may be determined based on CC index (or serving cell index) order. For example, after performing up to step 2 for each CC, the UE may perform mapping in order from the smallest CC index (ascending order) (see FIG. 7). Alternatively, after performing up to step 2 for each CC, the UE may perform mapping in order from the largest CC index (ascending order).

Note that FIG. 7 shows a case in which the order of the HARQ-ACK bits in the HARQ-ACK codebook is determined based on the order of priority of the CC index, the PDSCH reception candidate occasion index, and the TRP index. Note that the order of priority for determining the order of the HARQ-ACK bits may be changed as appropriate in application.

### [Case 2]

In case 1, the following condition is configured.
- Retransmission in the unit of the CBG: Not applied (or not configured)
- Maximum number of CWs for each TRP: 1
- Spatial bundling across the TRPs: Applied (or configured)

In such a case, the HARQ-ACK of 1 bit is generated in each PDSCH reception candidate occasion. In this case, the HARQ-ACK bits corresponding to different TRPs of the same cell (or CC) are bundled (for example, binarized). For example, in CC 0, in a case where both of the HARQ-ACK of TRP #0 and the HARQ-ACK of TRP #1 corresponding to a certain PDSCH reception candidate occasion (for example, K1 = 4) are "ACK", "ACK" may be generated, and in cases other than that, "NACK" may be generated.

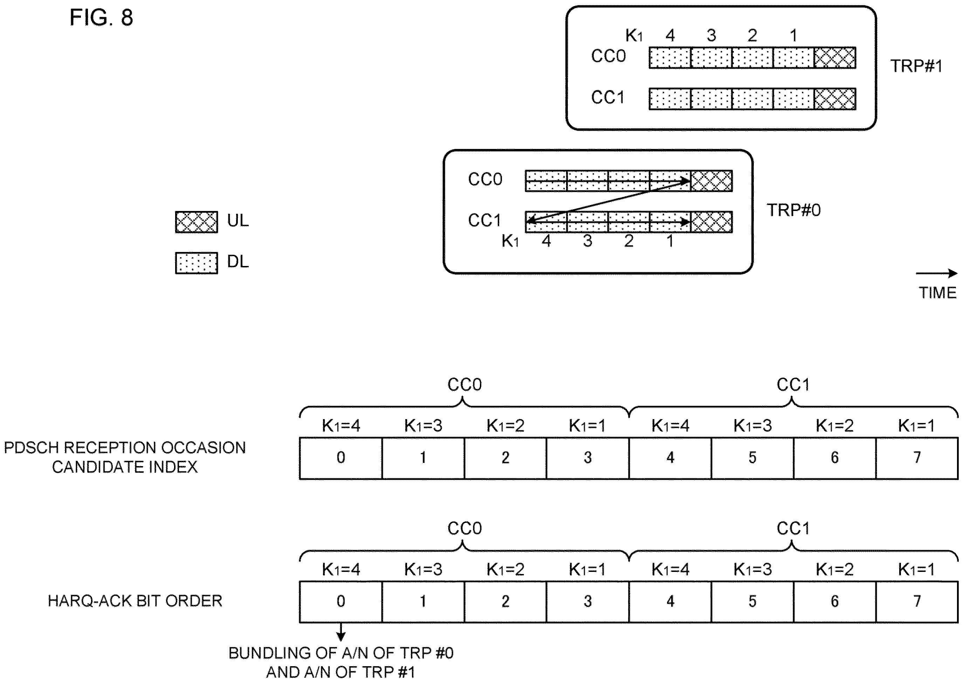

FIG. 8 shows a case in which the HARQ-ACKs for the PDSCHs respectively transmitted from two TRPs (M = 2) are joined together to be fed back. In this case, the UE generates the HARQ-ACK of 1 bit for each PDSCH reception candidate occasion determined in step 1.

In other words, for PDSCH reception candidate occasion index 0 (K₁ = 4) of a certain CC (for example, CC 0), the HARQ-ACK obtained by bundling the HARQ-ACK of TRP #0 and the HARQ-ACK of TRP #1 is generated. For other PDSCH reception candidate occasion indices 1 to 3 (K₁ = 3 to 1) as well, similarly, the HARQ-ACK obtained by bundling the HARQ-ACK corresponding to TRP #0 and the HARQ-ACK corresponding to TRP #1 is generated.

For PDSCH reception candidate occasion indices 4 to 7 (K₁ = 4 to 1) of another CC (for example, CC 1) as well, similarly, the HARQ-ACK obtained by bundling the HARQ-ACK corresponding to TRP #0 and the HARQ-ACK corresponding to TRP #1 is generated.

When the multi-TRP scenario is performed using a plurality of cells (or CCs), step 1 and step 2 described above are performed for each CC, and then the HARQ-ACKs corresponding to a plurality of CCs may be included in one HARQ-ACK codebook.

In this case, the bit order of the HARQ-ACK may be determined based on CC index (or serving cell index) order. For example, after performing up to step 2 for each CC, the UE may perform mapping in order from the smallest CC index (ascending order) (see FIG. 8). Alternatively, after performing up to step 2 for each CC, the UE may perform mapping in order from the largest CC index (ascending order).

Note that FIG. 8 shows a case in which the order of the HARQ-ACK bits in the HARQ-ACK codebook is determined based on the order of priority of the CC index and the TRP index. Note that the order of priority for determining the order of the HARQ-ACK bits may be changed as appropriate in application.

### [Case 3]

In case 3, the following condition is configured.
- Retransmission in the unit of the CBG: Applied (or configured)
- Maximum number of CWs for each TRP: 1
- Spatial bundling across the TRPs: Not applied (or not configured)

In such a case, the HARQ-ACK of M × N^{CBG/TB,max}_{HARQ-ACK} bits is generated in each PDSCH reception candidate occasion. M corresponds to the number of TRPs (or panels, PDSCHs, antenna port groups, DMRS port groups, RS related groups). N^{CBG/TB,max}_{HARQ-ACK} corresponds to the maximum number of CBGs for each transport block. N^{CBG/TB,max}_{HARQ-ACK} may be reported from the base station to the UE using higher layer signaling or the like.

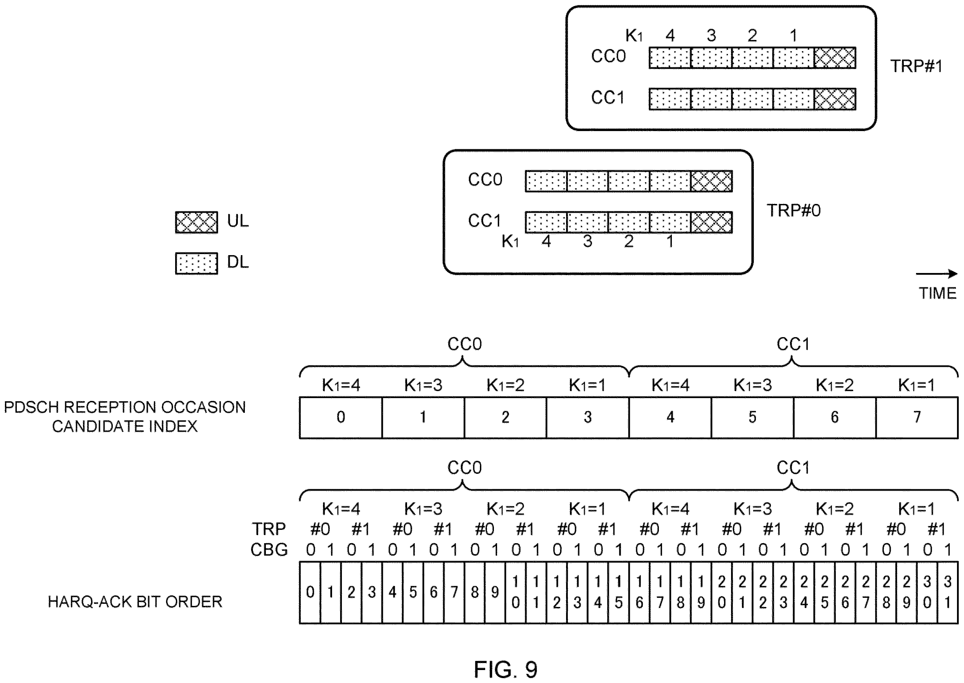

FIG. 9 shows a case in which the HARQ-ACKs for the PDSCHs respectively transmitted from two TRPs (M = 2) are joined together to be fed back. Here, a case of N^{CBG/TB,max}_{HARQ-ACK} = 2 is assumed. In this case, the UE generates the HARQ-ACK of M × N^{CBG/TB,max}_{HARQ-ACK} (here, 2 × 2) bits for each PDSCH reception candidate occasion (here, indices 0 to 7) determined in step 1.

In other words, for PDSCH reception candidate occasion index 0 (K₁ = 4) of a certain CC (for example, CC 0), the HARQ-ACK corresponding to each of CBG 0 and CBG 1 of TRP #0 and the HARQ-ACK corresponding to each of CBG 0 and CBG 1 of TRP #1 are generated. For other PDSCH reception candidate occasion indices 1 to 3 (K₁ = 3 to 1) as well, similarly, the HARQ-ACK corresponding to CBG 0 and CBG 1 of TRP #0 and the HARQ-ACK corresponding to each of CBG 0 and CBG 1 of TRP #1 are generated.

For PDSCH reception candidate occasion indices 4 to 7 (K₁ = 4 to 1) of another CC (for example, CC 1) as well, similarly, the HARQ-ACK corresponding to each of CBG 0 and CBG 1 of TRP #0 and the HARQ-ACK corresponding to each of CBG 0 and CBG 1 of TRP #1 are generated.

In each PDSCH reception candidate occasion, the bit order of the HARQ-ACK of M × N^{CBG/TB,max}_{HARQ-ACK} bits may be determined based on TRP index order and CBG index order. For example, the UE may map the HARQ-ACK bits of M × N^{CBG/TB,max}_{HARQ-ACK} bits corresponding to the PDSCH reception candidate occasion indices from the one whose corresponding TRP index and CBG index are the smallest (ascending order) (see FIG. 9). Note that higher priority may be given to the TRP index over the CBG index, or higher priority may be given to the CBG index over the TRP index.

Alternatively, the HARQ-ACK bits of M × N^{CBG/TB,max}_{HARQ-ACK} bits corresponding to the PDSCH reception candidate occasion indices may be mapped in order from the one whose corresponding TRP index and CBG index are the largest (descending order).

When the multi-TRP scenario is performed using a plurality of cells (or CCs), step 1 and step 2 described above are performed for each CC, and then the HARQ-ACKs corresponding to a plurality of CCs may be included in one HARQ-ACK codebook.

In this case, the bit order of the HARQ-ACK may be determined based on CC index (or serving cell index) order. For example, after performing up to step 2 for each CC, the UE may perform mapping in order from the smallest CC index (ascending order) (see FIG. 9). Alternatively, after performing up to step 2 for each CC, the UE may perform mapping in order from the largest CC index (ascending order).

Note that FIG. 9 shows a case in which the order of the HARQ-ACK bits in the HARQ-ACK codebook is determined based on the order of priority of the CC index, the PDSCH reception candidate occasion index, the TRP index, and the CBG index. Note that the order of priority for determining the order of the HARQ-ACK bits may be changed as appropriate in application.

### [Case 4]

In case 4, the following condition is configured.
- Retransmission in the unit of the CBG: Applied (or configured)
- Maximum number of CWs for each TRP: 1
- Spatial bundling across the TRPs: Applied (or configured)

In such a case, the HARQ-ACK of N^{CBG/TB,max}_{HARQ-ACK} bits is generated in each PDSCH reception candidate occasion. N^{CBG/TB,max}_{HARQ-ACK} corresponds to the maximum number of CBGs for each transport block. N^{CBG/TB,max}_{HARQ-ACK} may be reported from the base station to the UE using higher layer signaling or the like.

In this case, the HARQ-ACK bits corresponding to different TRPs of the same cell (or CC) are bundled (for example, binarized). For example, in CC 0, in a case where both of the HARQ-ACK of TRP 0 and the HARQ-ACK of TRP 1 corresponding to CBG 0 of a certain PDSCH reception candidate occasion (for example, K1 = 4) are "ACK", "ACK" may be generated, and in cases other than that, "NACK" may be generated.

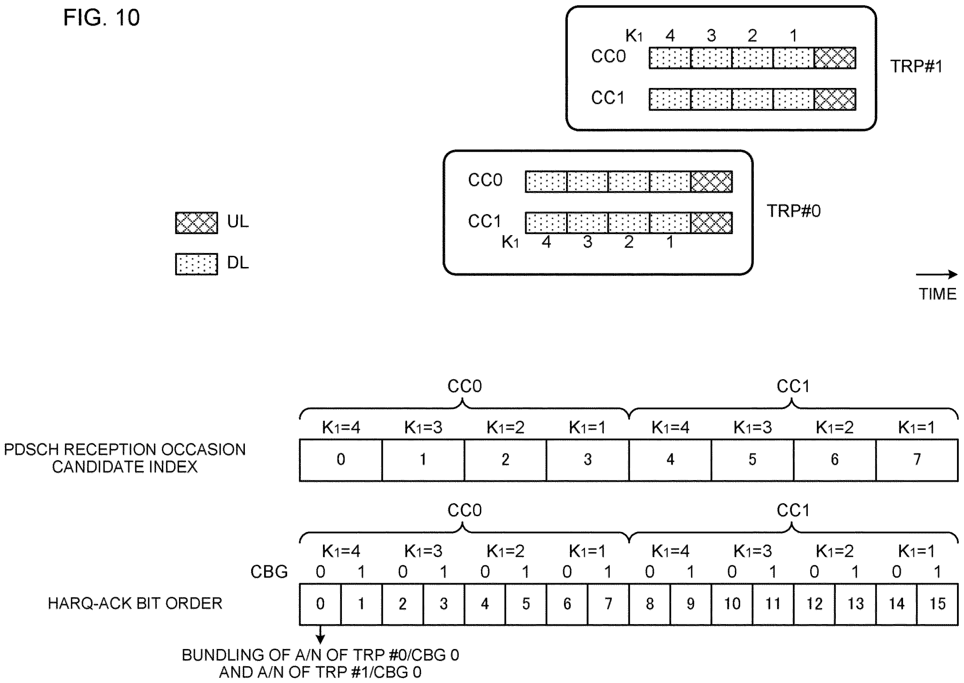

FIG. 10 shows a case in which the HARQ-ACKs for the PDSCHs respectively transmitted from two TRPs (M = 2) are joined together to be fed back. Here, a case of N^{CBG/TB,max}_{HARQ-ACK} = 2 is assumed. In this case, the UE generates the HARQ-ACK of N^{CBG/TB,max}_{HARQ-ACK} (here, 2) bits for each PDSCH reception candidate occasion determined in step 1.

In other words, for PDSCH reception candidate occasion index 0 (K₁ = 4) of a certain CC (for example, CC 0), the HARQ-ACK corresponding to CBG 0 of TRP #0 and the HARQ-ACK corresponding to CBG 0 of TRP #1 are bundled. Similarly, the HARQ-ACK corresponding to CBG 1 of TRP #0 and the HARQ-ACK corresponding to CBG 1 of TRP #1 are bundled. For other PDSCH reception candidate occasion indices 1 to 3 (K₁ = 3 to 1) as well, similarly, the HARQ-ACKs corresponding to CBG 0 of TRP #0 and CBG 0 of TRP #1 are bundled, and the HARQ-ACKs corresponding to CBG 1 of TRP #0 and CBG 1 of TRP #1 are bundled.

Further, for PDSCH reception candidate occasion indices 4 to 7 (K₁ = 4 to 1) of another CC (for example, CC 1) as well, similarly, the HARQ-ACKs corresponding to CBG 0 of TRP #0 and CBG 0 of TRP #1 are bundled, and the HARQ-ACKs corresponding to CBG 1 of TRP #0 and CBG 1 of TRP #1 are bundled.

In each PDSCH reception candidate occasion, the bit order of the HARQ-ACK of N^{CBG/TB,max}_{HARQ-ACK} bits may be determined based on the CBG index. For example, the UE may map the HARQ-ACK bits of N^{CBG/TB,max}_{HARQ-ACK} bits corresponding to the PDSCH reception candidate occasion indices from the one whose corresponding CBG index is the smallest (ascending order) (see FIG. 10).

Alternatively, the HARQ-ACK bits of N^{CBG/TB,max}_{HARQ-ACK} bits corresponding to the PDSCH reception candidate occasion indices may be mapped in order from the one whose corresponding CBG index is the largest (descending order).

When the multi-TRP scenario is performed using a plurality of cells (or CCs), step 1 and step 2 described above are performed for each CC, and then the HARQ-ACKs corresponding to a plurality of CCs may be included in one HARQ-ACK codebook.

In this case, the bit order of the HARQ-ACK may be determined based on CC index (or serving cell index) order. For example, after performing up to step 2 for each CC, the UE may perform mapping in order from the smallest CC index (ascending order) (see FIG. 10). Alternatively, after performing up to step 2 for each CC, the UE may perform mapping in order from the largest CC index (ascending order).

Note that FIG. 10 shows a case in which the order of the HARQ-ACK bits in the HARQ-ACK codebook is determined based on the order of priority of the CC index, the PDSCH reception candidate occasion index, and the CBG index. Note that the order of priority for determining the order of the HARQ-ACK bits may be changed as appropriate in application.

In this manner, by bundling the HARQ-ACKs of each TRP corresponding to the same CBG, increase of the HARQ-ACK bits (or the HARQ-ACK codebook size) to be fed back can be reduced.

### (Second Aspect)

In a second aspect, the HARQ-ACK codebook (also referred to as a HARQ-ACK sub-codebook) is determined for each TRP, and then the HARQ-ACK sub-codebooks are concatenated into one HARQ-ACK codebook. In the following, description is given by taking an example of a case in which there are two TRPs. However, the present invention can be similarly applied to a case in which there are three or more TRPs as well.

In the multiple TRP scenario, when the type 1 (in particular, the semi-static HARQ-ACK codebook) is configured as the HARQ-ACK codebook type, the UE controls the joint ACK/NACK feedback, based on the following steps 1 and 2.

In step 1, the UE determines the HARQ-ACK sub-codebook for each TRP. In step 2, the UE concatenates the HARQ-ACK sub-codebook of each TRP, and determines one HARQ-ACK codebook.

### <Step 1>

The UE determines the HARQ-ACK codebook (or also referred to as the HARQ-ACK sub-codebook) corresponding to each TRP. In particular, the UE determines the HARQ-ACK sub-codebook corresponding to each of the TRP by using the operation defined in Rel. 15 of 5G (or NR). In other words, the UE determines the HARQ-ACK sub-codebook separately for each TRP. Note that the HARQ-ACK sub-codebook may be determined for each CC.

For example, the UE determines a set of M_{A,c} occasions for the PDSCH reception candidates (a set of M_{A,c} occasions for candidate PDSCH receptions) for each TRP, based on a certain rule. The set of occasions for the PDSCH reception candidates may correspond to the HARQ-ACK transmitted in certain slot n.

### <<Step 1-1>>

The set of occasions for the PDSCH reception candidates may be determined based on at least one of the following conditions (1) to (4).
(1) Timing value (K₁) of the HARQ-ACK
(2) PDSCH resource allocation table
(3) Ratio between a subcarrier spacing of DL transmission (for example, the PDSCH) and a subcarrier spacing of UL transmission (for example, the PUCCH)
(4) UL/DL configuration configured from a network (for example, the base station)

Specifically, operation similar to that of step 1 according to the first aspect may be applied to determine the PDSCH reception candidate occasion for each TRP (or each TRP and CC).

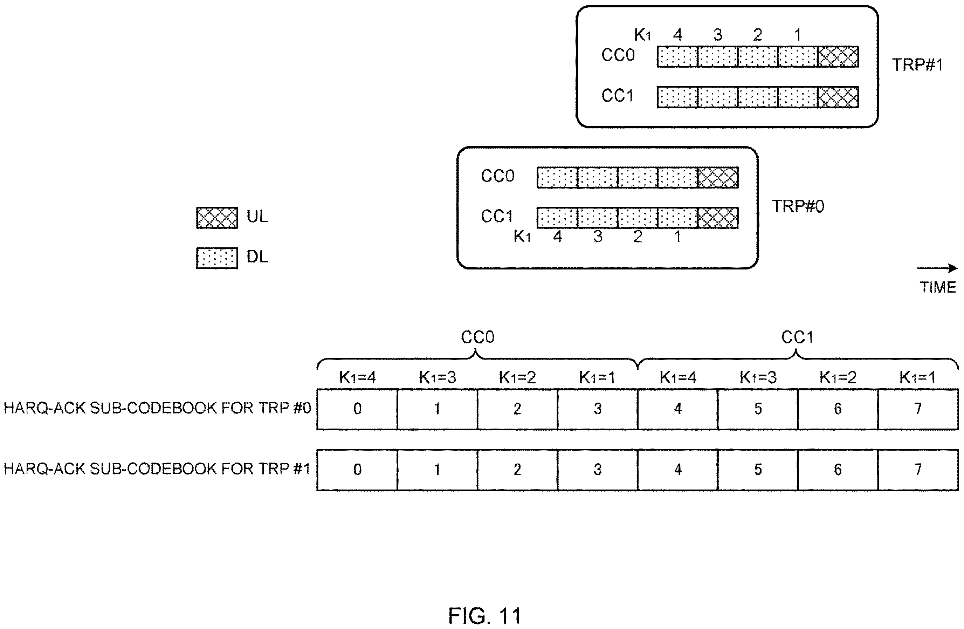

FIG. 11 shows an example of the PDSCH reception candidate occasion determined for each TRP. The description herein assumes a case in which CC 0 and CC 1 are configured in each of TRP #1 and TRP #2, and in slot n (UL) of each cell, the HARQ-ACKs for a plurality of PDSCHs (HARQ-ACKs respectively corresponding to K₁ = 4, 3, 2, 1) are transmitted. Note that the values of K₁ may be configured using at least one of higher layer signaling (for example, dl-DataToUL-ACK) and DCI.

The description herein illustrates a case in which, for each TRP, the PDSCH reception candidate occasion indices respectively corresponding to K₁ = 4 to 1 of CC 0 are 0 to 3, and the PDSCH reception candidate occasion indices respectively corresponding to K₁ = 4 to 1 of CC 1 are 4 to 7. The PDSCH reception candidate occasion indices are numbered based on the CC index, but this is not restrictive. The PDCCH reception candidate occasions may be configured for each TRP.

### <<Step 1-2>>

The UE determines each of the total number of bits of the HARQ-ACK and the HARQ-ACK bit order for each TRP. For example, the UE may determine the total number of bits of the HARQ-ACK, based on the maximum number of CWs configured for each TRP, whether or not spatial or temporal bundling is applied, whether or not retransmission in the unit of the CBG is applied, or the like. The UE determines the HARQ-ACK bit order, based on the CC index, the PDSCH reception candidate occasion index, or the like.

In FIG. 11, when the maximum number of CWs of the TRP is 1, retransmission in the unit of the CBG is not applied, and bundling is not applied, the total number of bits of the HARQ-ACK in each TRP is 8.

### <Step 2>

The UE concatenates the HARQ-ACK sub-codebook corresponding to each TRP, and thereby generates one HARQ-ACK codebook.

The UE concatenates the HARQ-ACK sub-codebook, based on the TRP index. For example, the UE may concatenate the HARQ-ACK sub-codebooks so as to perform mapping in order from the smallest TRP index (ascending order). Alternatively, the UE may concatenate the HARQ-ACK sub-codebooks so as to perform mapping in order from the largest TRP index (descending order).

When the multi-TRP scenario is performed using a plurality of cells (or CCs), the HARQ-ACK bit order is determined based on the CC index (or the serving cell index) between step 1 and step 2 described above (after step 1 is performed and before step 2 is performed).

In the following, description will be given by taking cases 1 to 3 as an example. Note that the present aspect can also be applied to cases other than the following cases.

### [Case 1]

In case 1, the following condition is configured.
- Retransmission in the unit of the CBG: Not applied (or not configured)
- Maximum number of CWs for each TRP: 1
- Spatial bundling across the TRPs: Not applied (or not configured)

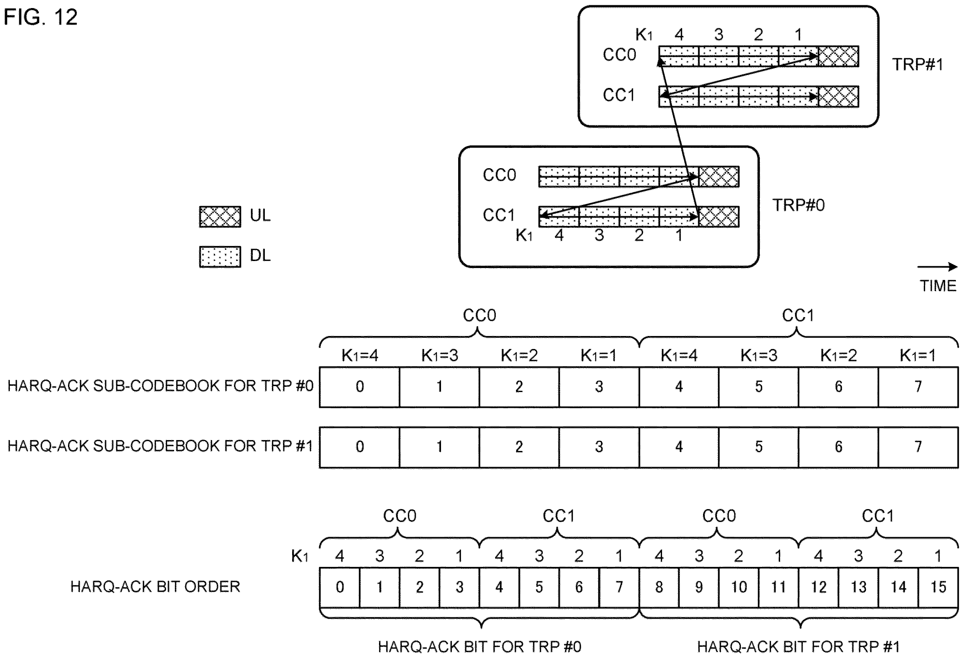

FIG. 12 shows an example of a case in which the HARQ-ACKs for the PDSCHs respectively transmitted from two TRPs (M = 2) are joined together to be fed back. The description herein illustrates a case in which the HARQ-ACK sub-codebook is determined for each of TRP #0 and TRP #1, and a plurality of the sub-codebooks are concatenated.

The HARQ-ACK sub-codebook of TRP #0 includes PDSCH reception candidate occasion indices 0 to 3 corresponding to K₁ = 4 to 1 configured in CC 0, and PDSCH reception candidate occasion indices 4 to 7 corresponding to K₁ = 4 to 1 configured in CC 1. The maximum number of CWs for each TRP is 1, and retransmission in the unit of the CBG is not applied, and thus the HARQ-ACK bits of each PDSCH reception candidate occasion are 1 bit (a total of 8 bits).

Similarly, the HARQ-ACK sub-codebook of TRP #1 includes PDSCH reception candidate occasion indices 0 to 3 corresponding to K₁ = 4 to 1 configured in CC 0, and PDSCH reception candidate occasion indices 4 to 7 corresponding to K₁ = 4 to 1 configured in CC 1. The maximum number of CWs for each TRP is 1, and retransmission in the unit of the CBG is not applied, and thus the HARQ-ACK bits of each PDSCH reception candidate occasion are 1 bit (a total of 8 bits) .

Next, the UE concatenates the HARQ-ACK sub-codebook of each TRP to generate one HARQ-ACK codebook. In particular, the UE determines a method of concatenating the HARQ-ACK codebooks, based on the TRP index. FIG. 12 shows a case in which the HARQ-ACK sub-codebooks are concatenated in order from the smallest TRP index. The method of concatenating the HARQ-ACK sub-codebooks is not limited to this, and the HARQ-ACK sub-codebooks may be concatenated in order from the largest TRP index.

The description herein illustrates a case in which the order of the HARQ-ACK bits in the HARQ-ACK codebook is determined based on the order of priority of the TRP index, the CC index, and the PDSCH reception candidate occasion index in the HARQ-ACK codebook. Note that the order of priority for determining the order of the HARQ-ACK bits may be changed as appropriate in application.

### [Case 2]

In case 2, the following condition is configured.
- Retransmission in the unit of the CBG: Not applied (or not configured)
- Maximum number of CWs for each TRP: 1
- Spatial bundling across the TRPs: Not applied (or not configured)

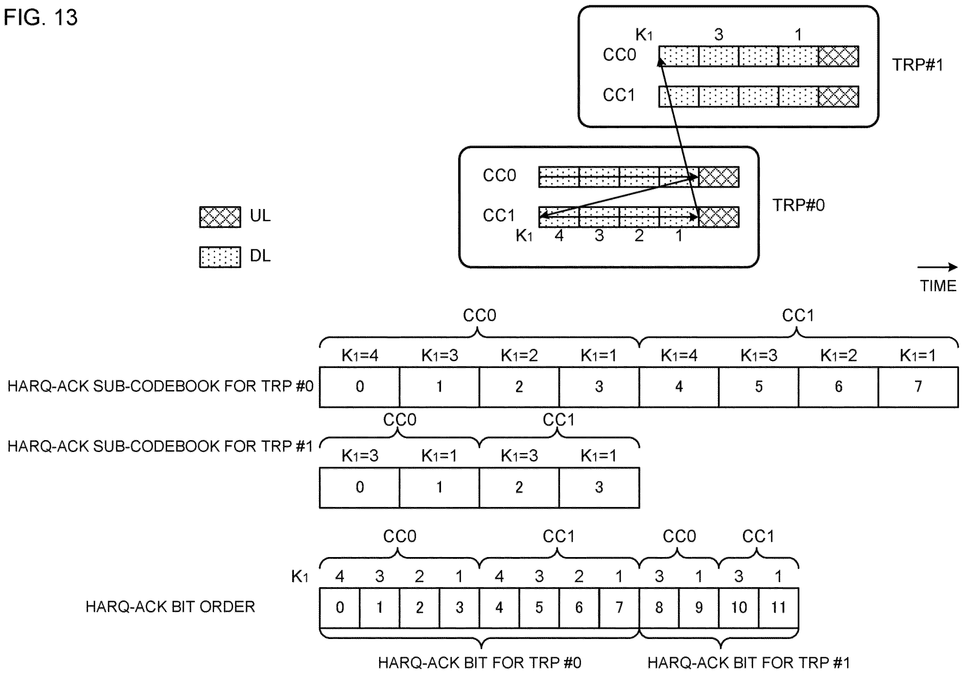

FIG. 13 shows an example of a case in which the HARQ-ACKs for the PDSCHs respectively transmitted from two TRPs (M = 2) are joined together to be fed back. The description herein illustrates a case in which the HARQ-ACK sub-codebook is determined for each of TRP #0 and TRP #1, and a plurality of the sub-codebooks are concatenated.

The HARQ-ACK sub-codebook of TRP #0 includes PDSCH reception candidate occasion indices 0 to 3 corresponding to K₁ = 4 to 1 configured in CC 0, and PDSCH reception candidate occasion indices 4 to 7 corresponding to K₁ = 4 to 1 configured in CC 1. The maximum number of CWs for each TRP is 1, and retransmission in the unit of the CBG is not applied, and thus the HARQ-ACK bits of each PDSCH reception candidate occasion are 1 bit (a total of 8 bits).

Similarly, the HARQ-ACK sub-codebook of TRP #1 includes PDSCH reception candidate occasion indices 0 and 1 corresponding to K₁ = 3, 1 configured in CC 0, and PDSCH reception candidate occasion indices 2 and 3 corresponding to K₁ = 3, 1 configured in CC 1. The maximum number of CWs for each TRP is 1, and retransmission in the unit of the CBG is not applied, and thus the HARQ-ACK bits of each PDSCH reception candidate occasion are 1 bit (a total of 4 bits). In this manner, different K₁ may be configured for each TRP.

Next, the UE concatenates the HARQ-ACK sub-codebook of each TRP to generate one HARQ-ACK codebook. For example, the UE may determine a method of concatenating the HARQ-ACK codebooks, based on the TRP index. FIG. 13 shows a case in which the HARQ-ACK sub-codebooks are concatenated in order from the smallest TRP index. The method of concatenating the HARQ-ACK sub-codebooks is not limited to this, and the HARQ-ACK sub-codebooks may be concatenated in order from the largest TRP index.

The description herein illustrates a case in which the order of the HARQ-ACK bits in the HARQ-ACK codebook is determined based on the order of priority of the TRP index, the CC index, and the PDSCH reception candidate occasion index in the HARQ-ACK codebook. Note that the order of priority for determining the order of the HARQ-ACK bits may be changed as appropriate in application.

Through the concatenation of the HARQ-ACK sub-codebook of each TRP to generate the HARQ-ACK codebook, even when a certain condition (for example, K₁ or the like) is configured separately for each TRP (for example, so as to be different from each other), generation of the HARQ-ACK codebook can be simplified.

### [Case 3]

In case 3, the following condition is configured.
- Retransmission in the unit of the CBG: Applied (or configured)
- Maximum number of CWs for each TRP: 1
- Spatial bundling across the TRPs: Not applied (or not configured)

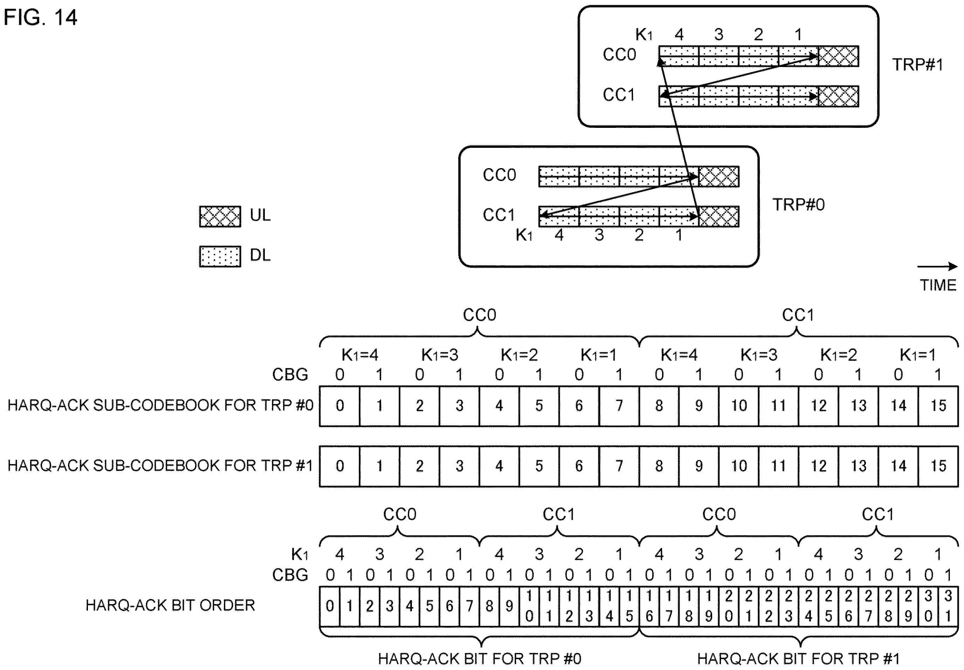

FIG. 14 shows an example of a case in which the HARQ-ACKs for the PDSCHs respectively transmitted from two TRPs (M = 2) are joined together to be fed back. The description herein illustrates a case in which the HARQ-ACK sub-codebook is determined for each of TRP #0 and TRP #1, and a plurality of the sub-codebooks are concatenated. The description herein illustrates a case in which retransmission in the unit of the CBG is applied (here, the maximum number (N^{CBG/TB,max}_{HARQ-ACK}) of CBGs is 2) .

The HARQ-ACK sub-codebook of TRP #0 includes PDSCH reception candidate occasion indices 0 to 7 corresponding to K₁ = 4 to 1 configured in CC 0, and PDSCH reception candidate occasion indices 8 to 15 corresponding to K₁ = 4 to 1 configured in CC 1. Here, two CBG indices (CBGs 0 and 1) are configured for each value of each K₁. The maximum number of CWs for each TRP is 1, and retransmission in the unit of the CBG is not applied, and thus the HARQ-ACK bits of each PDSCH reception candidate occasion are 1 bit (a total of 16 bits).

Similarly, the HARQ-ACK sub-codebook of TRP #1 includes PDSCH reception candidate occasion indices 0 to 7 corresponding to K₁ = 4 to 1 configured in CC 0, and PDSCH reception candidate occasion indices 8 to 15 corresponding to K₁ = 4 to 1 configured in CC 1. Here, two CBG indices (CBGs 0 and 1) are configured for each value of each K₁. The maximum number of CWs for each TRP is 1, and retransmission in the unit of the CBG is not applied, and thus the HARQ-ACK bits of each PDSCH reception candidate occasion are 1 bit (a total of 16 bits).

Next, the UE concatenates the HARQ-ACK sub-codebook of each TRP to generate one HARQ-ACK codebook. For example, the UE may determine a method of concatenating the HARQ-ACK codebooks, based on the TRP index. FIG. 14 shows a case in which the HARQ-ACK sub-codebooks are concatenated in order from the smallest TRP index. The method of concatenating the HARQ-ACK sub-codebooks is not limited to this, and the HARQ-ACK sub-codebooks may be concatenated in order from the largest TRP index.

The description herein illustrates a case in which the order of the HARQ-ACK bits in the HARQ-ACK codebook is determined based on the order of priority of the TRP index, the CC index, the PDSCH reception candidate occasion index, and the CBG index in the HARQ-ACK codebook. Note that the order of priority for determining the order of the HARQ-ACK bits may be changed as appropriate in application.

### (Variation 1)

The network (for example, the base station) may configure a certain condition (for example, K₁, whether or not retransmission in the unit of the CBG is applied, whether or not bundling is applied, a certain table, or the like) used for transmission control or reception control either in common or separately for a plurality of TRPs.

### <Timing Values (K₁) of HARQ-ACK>

The base station may configure the timing values (K₁) of the HARQ-ACK either in common or separately for a plurality of TRPs. FIGS. 7 to 12 and 14 each show a case in which K₁ (the same K₁) is configured in common for TRP 0 and TRP 1. In contrast, FIG. 13 shows a case in which K₁ is separately configured for TRP 0 and TRP 1.

When K₁ (the same K₁) is configured in common for a plurality of TRPs, the base station may configure, for the UE, one set of K₁ (for example, {1, 2, 3, 4} in FIGS. 7 to 12 and 14) for a plurality of TRPs by using higher layer signaling. It is only necessary that the UE apply the one set of K₁ configured using higher layer signaling for a plurality of TRPs.

Alternatively, the base station may configure, for the UE, a plurality of sets of K₁ (for example, {1, 2, 3, 4} and {1, 3} in FIG. 13) by using higher layer signaling. In this case, each set of K₁ may be configured being associated with a certain TRP. It is only necessary that the UE control the HARQ-ACK feedback, based on the set of K₁ configured separately for each TRP.

Note that, if only one set of K₁ corresponding to a certain TRP (for example, TRP #0) is configured at the time when a plurality of TRPs are configured, the UE may apply K₁ corresponding to the certain TRP to other TRPs (for example, TRP #1).

### <PDSCH Time Domain Resource Allocation Table>

The base station may configure a PDSCH time domain allocation table (PDSCH time domain resource allocation table) either in common or separately for a plurality of TRPs.

When the PDSCH time domain allocation table is configured in common for a plurality of TRPs, the base station may configure a certain PDSCH time domain allocation table for the plurality of TRPs by using higher layer signaling. It is only necessary that the UE apply the certain table configured using higher layer signaling for the plurality of TRPs.

Alternatively, the base station may configure a plurality of PDSCH time domain allocation tables for the UE by using higher layer signaling. In this case, each PDSCH time domain allocation table may be configured being associated with a certain TRP. It is only necessary that the UE control the HARQ-ACK feedback, based on the PDSCH time domain allocation table configured separately for each TRP. In this case, the PDSCH reception candidate occasions can be separately configured for each TRP.

Note that, if only a PDSCH time domain allocation table corresponding to a certain TRP (for example, TRP #0) is configured at the time when a plurality of TRPs are configured, the UE may apply the table corresponding to the certain TRP to other TRPs (for example, TRP #1).

### <Spatial Bundling across TRPs>

The base station may configure, for the UE, whether or not spatial bundling across the TRPs is applied by using higher layer signaling or the like.

### (Variation 2)

The UE may switch first HARQ-ACK feedback control illustrated in the first aspect and second HARQ-ACK feedback control illustrated in the second aspect in application. For example, the UE may select and apply one of the first HARQ-ACK feedback control and the second HARQ-ACK feedback control, based on configuration from the base station or a certain condition.

For example, when the PDSCH reception candidate occasions are configured to be the same for different TRPs, the UE may apply the first HARQ-ACK feedback control. As an example, the UE may apply the first HARQ-ACK feedback control when at least one (for example, all) of the following parameters is configured to be the same for a plurality of TRPs.
- Timing value (K₁) of the HARQ-ACK
- PDSCH time domain resource allocation table
- UL/DL configuration configured from a network (for example, the base station)

In contrast, when the PDSCH reception candidate occasions are configured to be either the same or different for different TRPs, the UE may apply the second HARQ-ACK feedback control. For example, when the first HARQ-ACK feedback control is not configured, the second HARQ-ACK feedback control may be configured.

### (Other Aspects)

In the multi-TRP scenario, the UE needs to determine the TRP corresponding to received DCI. When one piece of DCI (single DCI) is transmitted from a plurality of TRPs, the UE may determine the TRP associated with the piece of DCI, based on a certain field included in the piece of DCI. In this case, a bit value (or a code point) in the certain field and the TRP index may be configured being associated with each other. The certain field may be, for example, at least one of a resource allocation field and a TCI indication field.

When a plurality of pieces of DCI (multi-DCI) are transmitted from a plurality of TRPs, the UE may determine the TRP associated with each piece of DCI, based on a certain field included in the pieces of DCI or higher layer signaling.

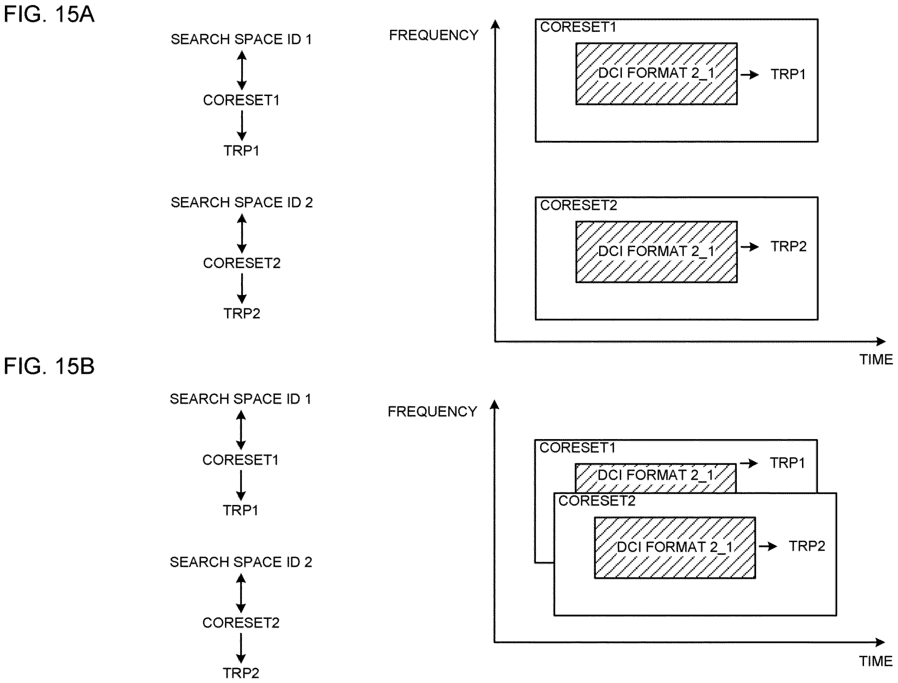

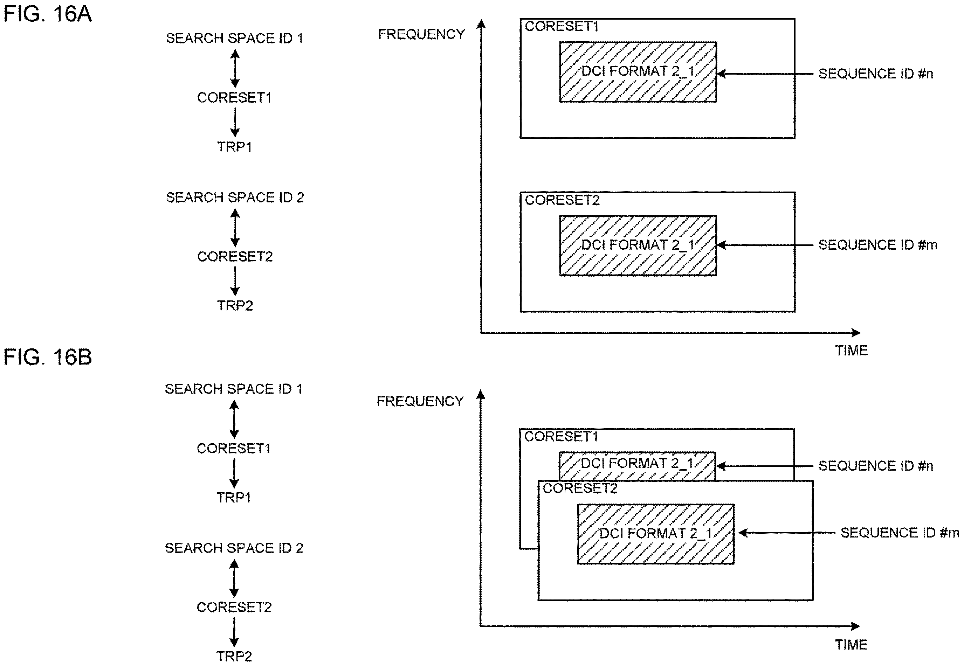

Alternatively, the UE may determine the TRP associated with each piece of DCI, based on a certain condition instead of an explicit indication. The following will describe a case (FIGS. 15A to 15C) in which the TRP is determined based on a control resource set (CORESET), and a case (FIGS. 16A to 16C) in which the TRP is determined based on a sequence ID. Note that the following description is given by taking DCI format 2_1 as an example of the DCI, but other DCI formats (for example, other DCI format 2 series) may be applied.

### <TRP Determination Example based on CORESET>

The UE may determine the TRP as an application target of DCI format 2_1, based on the CORESET associated with a certain search space set (for example, a type 3 PDCCH CSS set) in which DCI format 2_1 from each TRP is monitored.

Configuration information of the PDCCH for each serving cell or each BWP (PDCCH configuration information, for example, an RRC IE "PDCCH-Config") may include a list (for example, an RRC IE "controlResourceSetToAddModList") of one or more pieces of configuration information of the CORESET (CORESET configuration information, for example, the RRC IE "PDCCH-Config").

The configuration information of the PDCCH may include a list (for example, an RRC IE "searchSpacesToAddModList") of one or more pieces of configuration information of the search space set (search space configuration information, for example, an RRC IE "SearchSpace") .

Each TRP may correspond to (may be associated with) the CORESET configured by one piece of CORESET configuration information in the PDCCH configuration information. Specifically, regarding the UE, the CORESET may be configured for each TRP.

The UE may assume that DCI format 2_1 detected in each of a plurality of search space sets (for example, the type 3 PDCCH CSS set) associated with different CORESETs is applied to different TRPs.

Non-overlapped time domain resources and frequency domain resources may be allocated to a plurality of CORESETs associated with different TRPs. Alternatively, at least a part of the time domain resources and the frequency domain resources allocated to the plurality of CORESETs may be overlapped.

FIGS. 15A and 15B are each a diagram to show a TRP determination example based on the CORESET. In FIGS. 15A and 15B, it is assumed that DCI format 2_1 is transmitted from both of TRPs 1 and 2. Note that the search space set of "search space ID x" (x = 1, 2) shown in FIGS. 15A and 15B may be represented as "search space set x" (x = 1, 2). The search space set x may be, for example, the type 3 PDCCH CSS set.

In FIG. 15A, CORESETs 1 and 2 do not overlap in at least one of the time domain and the frequency domain. Specifically, in FIG. 15A, CORESETs 1 and 2 may be allocated to exclusive (exclusively) frequency domain resources (for example, one or more PRBs) or time domain resources (for example, one or more symbols).

In FIG. 15A, CORESETs 1 and 2 are respectively associated with different TRPs 1 and 2. When the UE detects DCI format 2_1 in search space set 1 associated with CORESET 1, the UE may apply the DCI format 2_1 to TRP 1 associated with CORESET 1.

When the UE detects DCI format 2_1 in search space set 2 associated with CORESET 2, the UE may apply the DCI format 2_1 to TRP 1 associated with CORESET 2.

In contrast, in FIG. 15B, CORESETs 1 and 2 overlap in at least one of at least a part of the time domain and the frequency domain. Specifically, in FIG. 15B, CORESETs 1 and 2 may be allocated to partially or entirely overlapped frequency domain resources (for example, one or more PRBs) and time domain resources (for example, one or more symbols).

As shown in FIG. 15B, when the frequency domain resources and the time domain resources allocated to CORESETs 1 and 2 are at least partially overlapped, even if CORESETs 1 and 2 have different QCL, the UE may not be able to determine to which TRP detected DCI format 2_1 belongs.

In view of this, the UE may determine the TRP as an application target of DCI format 2_1 detected in the search space set associated with a certain CORSET, based on any one of the following (1) to (4) .
(1) Value of an RNTI (for example, an INT-RNTI) used for CRC scrambling of the DCI format 2_1
(2) Value of a certain field (for example, the TRP ID) provided for each preemption indication in detected DCI format 2_1
(3) Configuration information related to the preemption indication (for example, an RRC IE "INT-ConfigurationPerServingCell")
(4) Sequence used for scrambling initialization of the DMRS of the PDCCH (for example, an RRC IE "pdcch-DMRS-ScramblingID")

For example, when the determination is performed based on (1), the TRP may be associated with the RNTI (for example, the INT-RNTI) (or the value of the RNTI) used for CRC scrambling of DCI format 2_1. In this case, the RNTI (the value thereof) may be provided for the UE for each TRP by using a higher layer parameter. The UE may apply DCI format 2_1 to the TRP that is associated with the RNTI with which detection of DCI format 2_1 has succeeded through monitoring (blind decoding) using the RNTI associated with each TRP.

When the determination is performed based on (2), a certain field indicating the TRP (or the TRP ID) may be added in DCI format 2_1. The UE may apply DCI format 2_1 (or each preemption indication in the DCI format 2_1) to the TRP indicated by a value of a certain field in detected DCI format 2_1.

When the determination is performed based on (3), information indicating the TRP to which each preemption indication is applied may be included in the configuration information related to the preemption indication (for example, the RRC IE "INT-ConfigurationPerServingCell") .

Alternatively, when the determination is performed based on (3), position information of the preemption indication corresponding to each TRP may be included in the configuration information related to the preemption indication (for example, the RRC IE "INT-ConfigurationPerServingCell").

When the determination is performed based on (4), the TRP may be associated with a sequence (or an ID of the sequence) for scrambling initialization of the DMRS of the PDCCH on which DCI format 2_1 is transmitted. In this case, the sequence may be provided for the UE for each TRP by using a higher layer parameter.

### <TRP Determination Example based on Sequence ID>

FIGS. 16A and 16B are each a diagram to show a TRP determination example based on the sequence ID according to the second aspect. In FIGS. 16A and 16B, it is assumed that a plurality of sequences (or sequence IDs) are configured for the UE regarding each CORESET. For example, in FIGS. 16A and 16B, for the UE, sequences ID #n and m are respectively provided for CORESETs 1 and 2, but this is not restrictive. For example, in FIGS. 16A and 16B, sequence ID #n is associated with TRP 1, and sequence ID #m is associated with TRP 2.

As shown in FIGS. 16A and 16B, the UE may assume that, when the UE detects DCI format 2_1 on the PDCCH demodulated using a DMRS sequence generated by sequence ID #n, the DCI format 2_1 indicates preemption for DL transmission (for example, the PDSCH) from TRP 1 associated with sequence ID #n. Specifically, regarding the UE, the UE may assume that preemption is indicated for the PDSCH scheduled on the PDCCH of the DMRS sequence generated by sequence ID #n.

In contrast, the UE may assume that, when the UE detects DCI format 2_1 on the PDCCH demodulated using a DMRS sequence generated by sequence ID #m, the DCI format 2_1 indicates preemption for DL transmission (for example, the PDSCH) from TRP 2 associated with sequence ID #m. Specifically, regarding the UE, the UE may assume that preemption is indicated for the PDSCH scheduled on the PDCCH of the DMRS sequence generated by sequence ID #m.

The determination of the TRP based on the sequence (or the sequence ID) may be used when a plurality of CORESETs respectively associated with a plurality of TRPs overlap (FIG. 16B), or may be used when the plurality of CORESETs do not overlap (FIG. 16A). In FIG. 16A, the CORESETs and the TRPs are associated with each other. However, even when the CORESETs and the TRPs are not associated, the TRP as an application target of DCI format 2_1 may be determined by using association between the sequences (or the sequence IDs) and the TRPs.

### <TRP Determination Example based on Other Parameters>

The UE may determine the TRP as an application target of DCI format 2_1, based on a certain search space set (for example, the type 3 PDCCH CSS set) in which DCI format 2_1 from each TRP is monitored.

Each TRP may correspond to (may be associated with) the search space set configured with one piece of search space configuration information in the PDCCH configuration information. Specifically, regarding the UE, the search space set may be configured for each TRP.

The UE may assume that DCI format 2_1 detected in each of different search space sets (for example, the type 3 PDCCH CSS sets) is applied to different TRPs. The different search space sets may be associated with the same CORESET, or may be associated with different CORESETs.

Alternatively, the UE may determine the TRP as an application target of DCI format 2_1, based on the PDCCH configuration information (for example, the RRC IE "PDCCH-Config") including the configuration information of the certain search space set in which DCI format 2_1 from each TRP is monitored and the configuration information of the CORESET associated with the certain search space set.

Each TRP may correspond to (may be associated with) the PDCCH configuration information. Specifically, regarding the UE, the PDCCH configuration information may be configured for each TRP.

Alternatively, the UE may determine the TRP as an application target of DCI format 2_1, based on the CDM group of the DMRS port of the PDSCH (or the PDCCH) from each TRP. Each TRP may correspond to (may be associated with) the CDM group.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

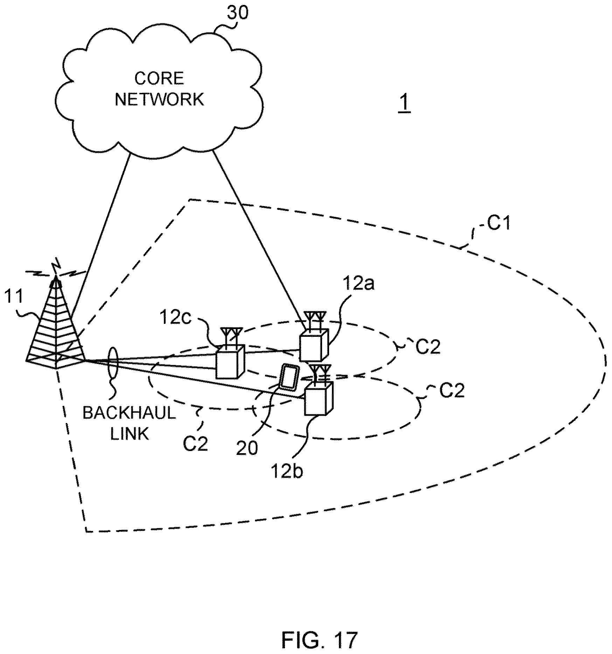

FIG. 17 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

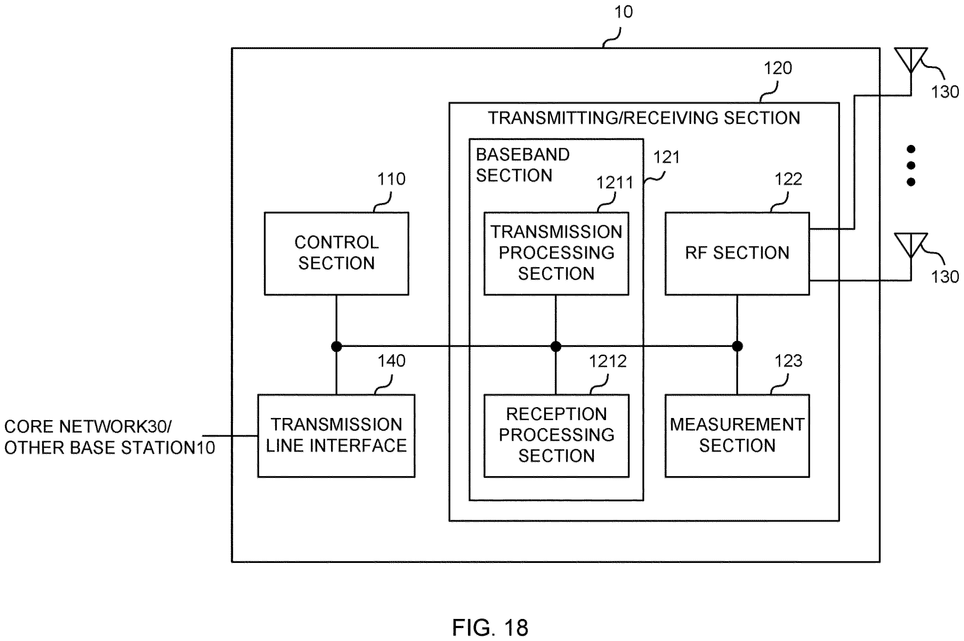

FIG. 18 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit information related to the type of the HARQ-ACK codebook applied to a plurality of TRPs in common. The transmitting/receiving section 120 may receive the HARQ-ACK codebook including the HARQ-ACK bits respectively corresponding to DL transmission (for example, the PDSCH) transmitted from the plurality of TRPs.

The control section 110 may perform control so that the same type of HARQ-ACK codebook is applied in the UE to the HARQ-ACKs respectively corresponding to DL transmission (for example, the PDSCH) transmitted from the plurality of TRPs.

### (User Terminal)

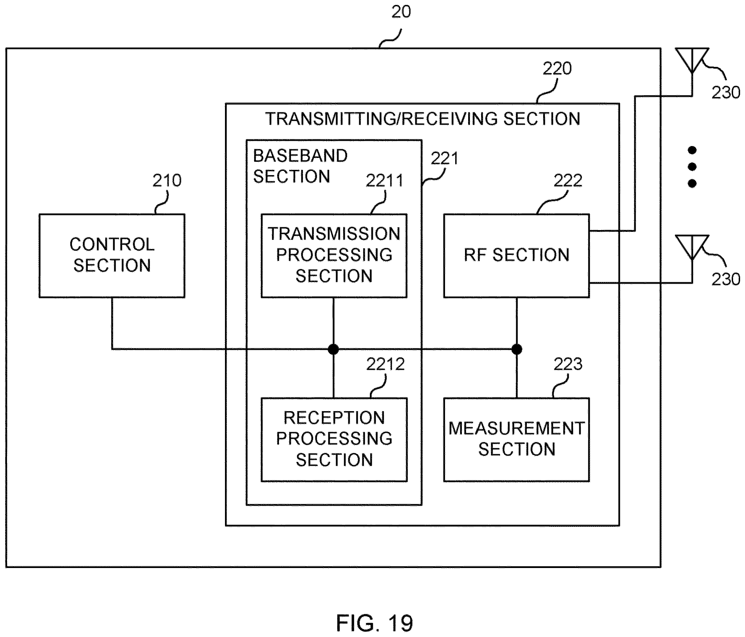

FIG. 19 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220, the transmitting/receiving antennas 230, and the communication path interface 240.

Note that the transmitting/receiving section 220 receives downlink shared channels respectively transmitted from a plurality of transmission/reception points. The transmitting/receiving section 220 may apply the same type of a codebook for a transmission confirmation signal to a plurality of pieces of retransmission control information for each downlink shared channel, and include the plurality of pieces of retransmission control information in the same codebook for the transmission confirmation signal and transmit the same codebook for the transmission confirmation signal. The transmitting/receiving section 220 may receive information related to the type of the HARQ-ACK codebook applied to a plurality of TRPs in common.

The control section 210 may perform control to apply the same type of a codebook for a transmission confirmation signal to a plurality of pieces of retransmission control information for each downlink shared channel, and include the plurality of pieces of retransmission control information in the same codebook for the transmission confirmation signal and transmit the same codebook for the transmission confirmation signal.

For example, the control section 210 may determine a reception candidate occasion of the downlink shared channels, and then determines at least one of the number of bits of the retransmission control information corresponding to the reception candidate occasion of each downlink shared channel and order of the retransmission control information. The control section 210 may determine the number of bits of the retransmission control information corresponding to the reception candidate occasion of each downlink shared channel, based on at least one of the maximum number of codewords for each transmission/reception point, whether or not spatial bundling across the plurality of transmission/reception points is applied, and whether or not retransmission to which a code block group is applied is configured.

Alternatively, the control section 210 may determine a sub-codebook for each transmission/reception point, and then determine a codebook for the transmission confirmation signal. For example, the control section 210 may concatenate the sub-codebook for each transmission/reception point, based on an index of each transmission/reception point, and determine the codebook for the transmission confirmation signal.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

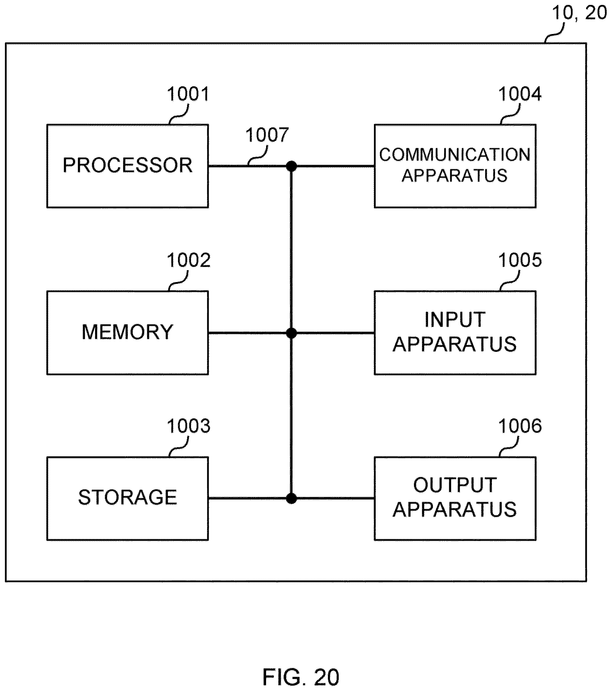

For example, a base station, a user terminal, and so on according to one embodiment of the present disclosure may function as a computer that executes the processes of the radio communication method of the present disclosure. FIG. 20 is a diagram to show an example of a hardware structure of the base station and the user terminal according to one embodiment. Physically, the above-described base station 10 and user terminal 20 may each be formed as computer an apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the scope of the invention defined by the recitations of claims. Consequently, the description of the present disclosure is provided only for the purpose of explaining examples, and should by no means be construed to limit the invention according to the present disclosure in any way.

## Claims

1. A terminal (20) comprising:
a receiving section (220) configured to receive physical downlink control channels, PDCCHs, each corresponding to a first control resource set, CORESET, and a second CORESET, and receive a plurality of physical downlink shared channels, PDSCHs, scheduled by the PDCCHs in a fully-overlapped time domain or a partially-overlapped time domain;
a control section (210) configured to, when a semi-static transmission acknowledgement information, HARQ-ACK, codebook is configured:
determine a first HARQ-ACK codebook corresponding to the first CORESET and a second HARQ-ACK codebook corresponding to the second CORESET,
determine a HARQ-ACK bit order in each HARQ-ACK codebook based on a first order of PDSCH reception candidate occasion index and a second order of serving cell index, and
concatenate the first HARQ-ACK codebook with the second HARQ-ACK codebook; and
a transmitting section (220) configured to transmit HARQ-ACK corresponding to the concatenated first HARQ-ACK codebook and second HARQ-ACK codebook.

2. A radio communication method performed by a terminal (20), the method comprising:
receiving physical downlink control channels, PDCCHs, each corresponding to a first control resource set, CORESET, and a second CORESET, and receiving a plurality of physical downlink shared channels, PDSCHs, scheduled by the PDCCHs in a fully-overlapped time domain or a partially-overlapped time domain;
when a semi-static transmission acknowledgement information, HARQ-ACK, codebook is configured:
determining a first HARQ-ACK codebook corresponding to the first CORESET and a second HARQ-ACK codebook corresponding to the second CORESET,
determining a HARQ-ACK bit order in each HARQ-ACK codebook based on a first order of PDSCH reception candidate occasion index and a second order of serving cell index, and
concatenating the first HARQ-ACK codebook with the second HARQ-ACK codebook; and
transmitting HARQ-ACK corresponding to the concatenated first HARQ-ACK codebook and second HARQ-ACK codebook.

3. A base station (10) comprising:
a transmitting section (120) configured to transmit a physical downlink control channel, PDCCH, corresponding to either a first control resource set, CORESET, or a second CORESET, and transmit a plurality of physical downlink shared channels, PDSCH, scheduled by the PDCCH in a fully-overlapped time domain or a partially-overlapped time domain; and
a receiving section (120) configured to receive transmission acknowledgement information, HARQ-ACK, corresponding to a concatenated first HARQ-ACK codebook and a second HARQ-ACK codebook,
wherein, when a semi-static HARQ-ACK codebook is configured, the first HARQ-ACK codebook corresponding to the first CORESET and the second HARQ-ACK codebook corresponding to the second CORESET are determined, a HARQ-ACK bit order in each HARQ-ACK codebook is determined based on a first order of PDSCH reception candidate occasion index and a second order of serving cell index, and the first HARQ-ACK codebook and the second HARQ-ACK codebook are concatenated with each other.

4. A system comprising a base station (10) according to claim 3 and a terminal (20) according to claim 1.

## Patentansprüche

1. Endgerät (20), umfassend:
einen Empfangsabschnitt (220), der konfiguriert ist, um physikalische Downlink-Control-Kanäle, PDCCHs, die jeweils einem ersten Steuerressourcensatz, CORESET, und einem zweiten CORESET entsprechen, zu empfangen, und eine Vielzahl von physikalischen Downlink-Shared-Kanälen, PDSCHs, die von den PDCCHs in einem vollständig überlappenden Zeitbereich oder einem teilweise überlappenden Zeitbereich eingeplant sind, zu empfangen;
einen Steuerabschnitt (210), der konfiguriert ist, um, wenn ein Codebuch für halbstatische Übertragungsbestätigungsinformationen, HARQ-ACK, konfiguriert ist:
ein erstes HARQ-ACK-Codebuch, das dem ersten CORESET entspricht, und ein zweites HARQ-ACK-Codebuch, das dem zweiten CORESET entspricht, zu bestimmen,
eine HARQ-ACK-Bitreihenfolge in jedem HARQ-ACK-Codebuch basierend auf einer ersten Ordnung eines PDSCH-Empfangskandidaten-Anlassindex und einer zweiten Ordnung eines Serving-Cell-Index zu bestimmen, und
das erste HARQ-ACK-Codebuch mit dem zweiten HARQ-ACK-Codebuch zu verknüpfen; und
einen Übertragungsabschnitt (220), der konfiguriert ist, um HARQ-ACK entsprechend dem verknüpften ersten HARQ-ACK-Codebuch und dem zweiten HARQ-ACK-Codebuch zu übertragen.

2. Funkkommunikationsverfahren, das von einem Endgerät (20) durchgeführt wird, wobei das Verfahren folgendes umfasst:
Empfangen physikalischer Downlink-Control-Kanäle, PDCCHs, die jeweils einem ersten Steuerressourcensatz, CORESET, und einem zweiten CORESET entsprechen, und Empfangen einer Vielzahl von physikalischen Downlink-Shared-Kanälen, PDSCHs, die von den PDCCHs in einem vollständig überlappenden oder einem teilweise überlappenden Zeitbereich eingeplant sind;
wenn ein Codebuch für halbstatische Übertragungsbestätigungsinformationen, HARQ-ACK, konfiguriert ist:
Bestimmen eines ersten HARQ-ACK-Codebuchs, das dem ersten CORESET entspricht, und eines zweiten HARQ-ACK-Codebuchs, das dem zweiten CORESET entspricht,
Bestimmen einer HARQ-ACK-Bitreihenfolge in jedem HARQ-ACK-Codebuch basierend auf einer ersten Ordnung des PDSCH-Empfangskandidaten-Anlassindex und einer zweiten Ordnung des Serving-Cell-Index, und
Verknüpfen des ersten HARQ-ACK-Codebuchs mit dem zweiten HARQ-ACK-Codebuch; und
Übertragen von HARQ-ACK entsprechend dem verknüpften ersten HARQ-ACK-Codebuch und dem zweiten HARQ-ACK-Codebuch.

3. Basisstation (10), umfassend:
einen Übertragungsabschnitt (120), der konfiguriert ist, um einen physikalischen Downlink-Control-Kanal, PDCCH, entsprechend entweder einem ersten Steuerressourcensatz, CORESET, oder einem zweiten CORESET, zu übertragen, und eine Vielzahl von physikalischen Downlink-Shared-Kanälen, PDSCH, die von dem PDCCH in einem vollständig überlappenden Zeitbereich oder einem teilweise überlappenden Zeitbereich eingeplant sind; und
einen Empfangsabschnitt (120), der konfiguriert ist, um Übertragungsbestätigungsinformationen, HARQ-ACK, entsprechend einem verknüpften ersten HARQ-ACK-Codebuch und einem zweiten HARQ-ACK-Codebuch zu empfangen,
wobei, wenn ein halbstatisches HARQ-ACK-Codebuch konfiguriert ist, das erste HARQ-ACK-Codebuch entsprechend dem ersten CORESET und das zweite HARQ-ACK-Codebuch entsprechend dem zweiten CORESET bestimmt werden, eine HARQ-ACK-Bitfolge in jedem HARQ-ACK-Codebuch basierend auf einer ersten Reihenfolge eines PDSCH-Empfangskandidaten-Anlassindex und einer zweiten Reihenfolge eines Serving-Cell-Index bestimmt wird, und das erste HARQ-ACK-Codebuch und das zweite HARQ-ACK-Codebuch miteinander verknüpft werden.

4. System, umfassend eine Basisstation (10) nach Anspruch 3 und ein Endgerät (20) nach Anspruch 1.

## Revendications

1. Terminal (20) comprenant :
une section de réception (220) configurée pour recevoir des canaux de commande de liaison descendante physique, PDCCH, chacun correspondant à un premier ensemble de ressources de commande, CORESET et à un second CORESET, et recevoir une pluralité de canaux partagés de liaison descendante physique, PDSCH, planifiés par les PDCCH dans un domaine temporel entièrement chevauché ou un domaine temporel partiellement chevauché ;
une section de commande (210) configurée pour, lorsqu'un livre de codes d'informations d'accusé de réception de transmission, HARQ-ACK, semi-statique est configuré :
déterminer un premier livre de codes HARQ-ACK correspondant au premier CORESET et un second livre de codes HARQ-ACK correspondant au second CORESET,
déterminer un ordre de bits HARQ-ACK dans chaque livre de codes HARQ-ACK sur la base d'un premier ordre d'indice d'occasions candidates de réception de PDSCH et d'un second ordre d'indice de cellule de desserte, et
concaténer le premier livre de codes HARQ-ACK avec le second livre de codes HARQ-ACK ; et
une section de transmission (220) configurée pour transmettre des HARQ-ACK correspondant au premier livre de codes HARQ-ACK et au second livre de codes HARQ-ACK concaténés.

2. Procédé de radiocommunication réalisé par un terminal (20), le procédé comprenant :
la réception de canaux de commande de liaison descendante physique, PDCCH, chacun correspondant à un premier ensemble de ressources de commande, CORESET et à un second CORESET, et la réception d'une pluralité de canaux partagés de liaison descendante physique, PDSCH, planifiés par les PDCCH dans un domaine temporel entièrement chevauché ou un domaine temporel partiellement chevauché ;
lorsqu'un livre de codes d'informations d'accusé de réception de transmission, HARQ-ACK, semi-statique est configuré :
la détermination d'un premier livre de codes HARQ-ACK correspondant au premier CORESET et d'un second livre de codes HARQ-ACK correspondant au second CORESET,
la détermination d'un ordre de bits HARQ-ACK dans chaque livre de codes HARQ-ACK sur la base d'un premier ordre d'indice d'occasions candidates de réception de PDSCH et d'un second ordre d'indice de cellule de desserte, et
la concaténation du premier livre de codes HARQ-ACK avec le second livre de codes HARQ-ACK ; et
la transmission des HARQ-ACK correspondant au premier livre de codes HARQ-ACK et au second livre de codes HARQ-ACK concaténés.

3. Station de base (10) comprenant :
une section de transmission (120) configurée pour transmettre un canal de commande de liaison descendante physique, PDCCH, correspondant à un premier ensemble de ressources de commande, CORESET ou à un second CORESET, et transmettre une pluralité de canaux partagés de liaison descendante physique, PDSCH, planifiés par le PDCCH dans un domaine temporel entièrement chevauché ou un domaine temporel partiellement chevauché ; et
une section de réception (120) configurée pour recevoir des informations d'accusé de réception de transmission, HARQ-ACK correspondant à un premier livre de codes HARQ-ACK concaténé et à un second livre de codes HARQ-ACK,
dans lequel, lorsqu'un livre de codes HARQ-ACK semi-statique est configuré, le premier livre de codes HARQ-ACK correspondant au premier CORESET et le second livre de codes HARQ-ACK correspondant au second CORESET sont déterminés,
un ordre de bits HARQ-ACK dans chaque livre de codes HARQ-ACK est déterminé sur la base d'un premier ordre d'indice d'occasions candidates de réception de PDSCH et d'un second ordre d'indice de cellule de desserte, et le premier livre de codes HARQ-ACK et le second livre de codes HARQ-ACK sont concaténés l'un avec l'autre.

4. Système comprenant une station de base (10) selon la revendication 3 et un terminal (20) selon la revendication 1.
